# EUROPEAN PATENT APPLICATION

(11) **EP 4 793 329 A1**
(43) Date of publication of application: **19.08.2026**
(21) Application number: 24877057.0
(22) Date of filing: 01.10.2024
(51) Int. Cl.: C09K 3/00, C08L 83/05, C08L 83/07

(54) **CURABLE ORGANOPOLYSILOXANE COMPOSITION FOR RELEASE SHEETS, AND RELEASE SHEET**

(30) Priority: 13.10.2023 JP 2023177673
(71) Applicant: SHIN-ETSU CHEMICAL CO., LTD., Tokyo 100-0005 (JP)
(72) Inventor: KOBAYASHI, Ataru, Annaka-shi, Gunma 379-0224 (JP); IHARA, Toshiaki, Annaka-shi, Gunma 379-0224 (JP)
(74) Representative: Ter Meer Steinmeister & Partner
(86) International application number: PCT/JP2024/035083
(87) International publication number: WO 2025/079459

(57) **Abstract**

Disclosed is a curable organopolysiloxane composition which contains the components (A), (B), (C) and (D) described below, does not separate or precipitate an addition reaction control agent even when stored at low temperatures, has excellent low-temperature storage stability, and has excellent pot life at high temperatures.
(A) an organopolysiloxane which has an alkenyl group bonded to a silicon atom,
(B) an organohydrogenpolysiloxane,
(C) an addition reaction control agent which contains the components (C-1) and (C-2) described below, and is in an amount of 0.06-0.60 part by mass relative to a total of 100 parts by mass of the components (A) and (B), wherein the mass ratio (C-2)/(C-1) of the component (C-2) to the component (C-1) is 0.10-5.00,
the component (C-1) is an acetylene alcohol having a boiling point of 150-189°C, and
the component (C-2) is a compound having a refractive index of 1.420-1.450 at 25°C and a boiling point of 190°C or higher,

(D) a platinum group metal-based catalyst.

## Description

### TECHNICAL FIELD

The invention relates to a curable organopolysiloxane composition for release sheets and to a release sheet using the same.

### BACKGROUND ART

In the prior art approach for preventing adhesion between substrates of paper, plastic, or the like and pressure-sensitive adhesives, a cured film of an organopolysiloxane composition is disposed on the substrate surface to impart release properties. As a method for forming the cured organopolysiloxane film on the substrate surface, a method for forming a releasable film by an addition reaction has been widely used because of excellent curability. The method for forming a releasable film by an addition reaction includes a type in which an organopolysiloxane composition is dissolved in an organic solvent, a type in which the organopolysiloxane composition is dispersed in water using an emulsifier to form an emulsion, and a solvent-free type in which organopolysiloxane alone is used. However, the solvent type has a disadvantage that it may cause harm to the human body and the environment, and therefore, from the viewpoint of safety, a shift from the solvent type to the solvent-free type has been progressing. For the emulsion type, which requires high energy to remove water, it is difficult to obtain a cured film under curing conditions of a relatively low temperature and a relatively short time. For this reason, the solvent-free organopolysiloxane composition has been used most widely. The solvent-free type, which uses basic blending of a base component (alkenyl group-containing siloxane), a crosslinking agent (SiH group-containing siloxane), and a platinum catalyst, requires an addition reaction control agent that suppresses the addition reaction due to the platinum catalyst at room temperature and rapidly advances the addition reaction at high temperature.

As the control agent, acetylenic alcohols have been known for a long time to be useful. However, some acetylenic alcohols have low compatibility with organopolysiloxane compositions, and in particular, in formulations in which the control agent is present at a high concentration in a two-part or three-part system, problems such as separation of the acetylenic alcohols may occur. In fact, 1-ethynyl-1-cyclohexanol, which has been widely used because of its ability to control the addition reaction and ease of availability, has poor compatibility with organopolysiloxane compositions. Furthermore, since the melting point is about 31°C, a problem may arise in that the compound is easily precipitated as a solid during low-temperature storage. Therefore, control agents in which the hydroxyl group of an acetylenic alcohol is silylated have been known as control agents having improved compatibility with organopolysiloxane compositions and improved storage stability at low temperature. However, when these control agents are used alone, although compatibility and low-temperature storage stability can be improved, problems such as reduced curability and reduced pot life may occur.

Accordingly, JP-A H09-143371 and JP-A H08-176448 disclose organopolysiloxane compositions using two control agents having different boiling points in combination. JP-A H09-143371 uses two addition reaction inhibitors having a boiling point of 130°C or lower and a boiling point of 170°C or higher in combination to suppress formation of gel, particularly when a thin film is formed on a coating roll. On the other hand, JP-A H08-176448 states that use of two acetylenic compounds having a boiling point of 150°C or higher and a boiling point of less than 150°C in combination can provide excellent curability and a stable pot life. In addition, two organohydrogenpolysiloxanes having different SiH group contents are combined to thereby achieve both releasability and adhesion of the film to a substrate.

Furthermore, JP-A H11-166122 discloses an organopolysiloxane composition using two control agents in combination that are a small amount of an acetylenic alcohol and a large amount of a silylated acetylenic alcohol. The document states that the combined use of these two control agents can provide an organopolysiloxane composition having excellent stability in which release characteristics and curability are less likely to change over time. Patent Document 2 describes adhesion to various substrates, but this description describes the relationship between organohydrogenpolysiloxane and adhesion, and does not mention at all the relationship between the blending amount of the control agent and adhesion.

### PRIOR ART DOCUMENTS

### PATENT DOCUMENTS

Patent Document 1: JP-A H09-143371
Patent Document 2: JP-A H08-176448
Patent Document 3: JP-A H11-166122

### SUMMARY OF INVENTION

### TECHNICAL PROBLEM

An object of the invention, which has been made under the above-mentioned circumstances, is to provide a release-sheet curable organopolysiloxane composition which has excellent low-temperature storage stability without separation or precipitation of the addition reaction control agent even when stored at a low temperature such as 0°C or lower, has an excellent pot life at a high temperature, forms no gel during coating work on a coating roll and has excellent thin film stability, exhibits high curability when coated on various substrates, and further provides a cured film having excellent adhesion to various substrates, and a release sheet using the organopolysiloxane composition.

### SOLUTION TO PROBLEM

As a result of intensive studies to achieve the above object, the inventors have found a peculiar effect in which an increase in the blending amount of an acetylenic alcohol having a boiling point of 150 to 189°C, which is a first addition reaction control agent, improves adhesion of a cured film to various substrates. However, since such an acetylenic alcohol has low solubility in organopolysiloxane compositions, separation or precipitation of the acetylenic alcohol occurs during low-temperature storage when the blending amount is increased. Therefore, a compound having high solubility in organopolysiloxane compositions, serving as a second addition reaction control agent, and having a refractive index at 25°C of 1.420 to 1.450 and a boiling point of 190°C or higher is used in combination, to thereby improve adhesion of the cured film to various substrates while reducing the blending amount of the acetylenic alcohol.

The inventors believe that the following theory, which does not limit the invention, provides the effect in which an increase in the blending amount of the addition reaction control agent improves adhesion of the cured film to various substrates. As a method for improving adhesion, a method of increasing the number of silicon-bonded hydrogen atoms in an organopolysiloxane composition has been known for a long time. This is inferentially because silicon-bonded hydrogen atoms interact with the substrate. When the blending amount of the addition reaction control agent is small, the reaction rapidly proceeds by heating, and silicon-bonded hydrogen atoms are preferentially consumed in an addition reaction with silicon-bonded alkenyl groups. Therefore, there is little room for the silicon-bonded hydrogen atoms to interact with the substrate. On the other hand, when the blending amount of the addition reaction control agent is large, the reaction proceeds gradually, and silicon-bonded hydrogen atoms undergo an addition reaction with silicon-bonded alkenyl groups while interacting with the substrate. Therefore, interaction between silicon-bonded hydrogen atoms and the substrate is easily formed, which presumably results in improvement in adhesion of the cured film to various substrates.

The effect of using component (C-2) in combination is believed to include the following functions, in addition to reducing the blending amount of the acetylenic alcohol of component (C-1) as described above. The organopolysiloxane composition used in the invention has a refractive index at 25°C of around 1.40. On the other hand, 1-ethynyl-1-cyclohexanol, as an example of component (C-1), has a refractive index at 25°C of 1.481, and the large difference in refractive index from the organopolysiloxane composition is one factor that lowers compatibility. Due to this low compatibility, when the blending amount of component (C-1) is increased, particularly when a two-part system or a three-part system is employed, low-temperature storage stability is reduced. Since component (C-2) has a refractive index at 25°C of 1.420 to 1.450, component (C-2) is easily compatible with both the organopolysiloxane composition and component (C-1), and is presumed to function like a compatibilizer for both.

On the other hand, since component (C-2) is a very strong addition reaction control agent having a boiling point of 190°C or higher, curability is drastically reduced, and it is difficult to achieve both curability and pot life. The inventors have found that combined use of component (C-1) and component (C-2) can provide all desired properties of low-temperature storage stability, pot life at a high temperature, suppression of formation of gel during coating work on a coating roll (thin film stability), high curability, and adhesion of the cured film to various substrates.

Accordingly, the invention provides the following inventions.
1. A curable organopolysiloxane composition for release sheets, comprising the following components (A), (B), (C), and (D):
   (A) an organopolysiloxane having at least two silicon-bonded alkenyl groups per molecule, having a content of silicon-bonded alkenyl groups of 0.001 to 0.3 mol/100 g, and having a viscosity at 25°C of 1 to 10,000 mPa·s, in an amount of 90 to less than 100 parts by mass;
   (B) an organohydrogenpolysiloxane having at least three silicon-bonded hydrogen atoms per molecule, having a content of silicon-bonded hydrogen atoms of 0.5 to 2.0 mol/100 g, and having a viscosity at 25°C of 2 to 200 mPa·s, in an amount such that a number ratio of the silicon-bonded hydrogen atoms in component (B) to alkenyl groups in component (A) is 0.5 to 5.0;
   (C) an addition reaction control agent including the following (C-1) and (C-2), in an amount of 0.06 to 0.60 parts by mass based on a total of 100 parts by mass of components (A) and (B), with a mass ratio of (C-2) to (C-1), (C-2)/(C-1), of 0.10 to 5.00,
      (C-1) an acetylenic alcohol having a boiling point of 150 to 189°C and represented by the following formula (1): 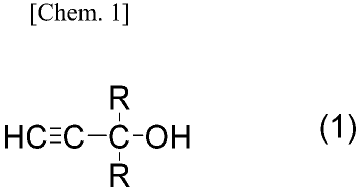 wherein R is each independently a hydrogen atom or an unsubstituted or substituted monovalent hydrocarbon group free of aliphatic unsaturation, and two R may be bonded to each other to form a ring, in an amount of 0.02 to 0.40 parts by mass based on the total of 100 parts by mass of components (A) and (B);
      (C-2) a compound having a refractive index at 25°C of 1.420 to 1.450 and a boiling point of 190°C or higher, in an amount of 0.02 to 0.40 parts by mass based on the total of 100 parts by mass of components (A) and (B); and
   (D) a platinum group metal-based catalyst in an amount to give 0.1 to 200 ppm of platinum group metal based on a total mass of components (A) to (C).
2. The curable organopolysiloxane composition for release sheets according to 1, which is a two-part curable organopolysiloxane composition for release sheets, comprising a liquid composition 2-1 and a liquid composition 2-2,
   wherein the liquid composition 2-1 contains component (A) and component (D), and
   the liquid composition 2-2 contains component (B) and component (C), and optionally contains component (A).
3. The curable organopolysiloxane composition for release sheets according to 1, which is a three-part curable organopolysiloxane composition for release sheets, comprising a liquid composition 3-1, a liquid composition 3-2, and a liquid composition 3-3, wherein (I) the liquid composition 3-1 consists of component (A) alone,
   the liquid composition 3-2 contains component (B), component (C), and optionally component (A), and
   the liquid composition 3-3 contains component (D) and optionally component (A), or (II) the liquid composition 3-1 contains component (A) and component (C),
   the liquid composition 3-2 contains component (B) and optionally component (A), and
   the liquid composition 3-3 contains component (D) and optionally component (A).
4. The curable organopolysiloxane composition for release sheets according to any one of 1 to 3, wherein component (C-1) is selected from 1-ethynyl-1-cyclohexanol and 3,5-dimethyl-1-hexyn-3-ol.
5. The curable organopolysiloxane composition for release sheets according to any one of 1 to 3, wherein component (C-2) is one or more compounds selected from bis(1,1-dimethyl-2-propynyloxy)dimethylsilane, 1,3,5,7-tetramethyl-1,3,5,7-tetravinylsiloxane, and 3-methyl-1-dodecyn-3-ol.
6. The curable organopolysiloxane composition for release sheets according to any one of 1 to 5, wherein component (A) is an organopolysiloxane having at least two silicon-bonded alkenyl groups per molecule, having a content of silicon-bonded alkenyl groups of 0.01 to 0.08 mol/100 g, and having a viscosity at 25°C of 60 to 1,000 mPa·s.
7. The curable organopolysiloxane composition for release sheets according to any one of 1 to 6, wherein component (A) is a mixture containing the following components (A-1) and (A-2), and component (A) as a whole has a content of silicon-bonded alkenyl groups of 0.001 to 0.3 mol/100 g:
   (A-1) an organopolysiloxane having two or more silicon-bonded alkenyl groups per molecule and having a content of silicon-bonded alkenyl groups of 0.001 mol/100 g or more and less than 0.3 mol/100 g, in an amount of 50 to 99.9 parts by mass; and
   (A-2) an organopolysiloxane having 0.1 to 20 silicon-bonded (meth)acryloyl group-containing groups per molecule and having 0.1 or more silicon-bonded alkenyl groups per molecule, in an amount of 0.1 to 50 parts by mass.
8. The curable organopolysiloxane composition for release sheets according to 7, wherein component (A-1) is an organopolysiloxane represented by the following formula (2):

   (R¹₃SiO_{1/2})ₐ(R¹₂SiO)_{b}(R¹SiO_{3/2})_{c}(SiO_{4/2})_{d} (2)

   wherein R¹ is each independently a hydroxyl group, an alkenyl group of 2 to 12 carbon atoms, or an unsubstituted or substituted monovalent hydrocarbon group free of aliphatic unsaturation, at least two of R¹ are alkenyl groups, and a to d are each 0 or a positive number satisfying 2 ≤ a ≤ 202, 5 ≤ b ≤ 1,000, 0 ≤ c ≤ 100, and 0 ≤ d ≤ 100, provided that 0 ≤ c + d ≤ 100.
9. The curable organopolysiloxane composition for release sheets according to 7 or 8, wherein component (A-2) is an organopolysiloxane represented by the following formula (3):

   (R²₃SiO_{1/2})ₑ(R²₂SiO)_{f}(R²SiO_{3/2})_{g}(SiO_{4/2})ₕ (3)

   wherein R² is each independently a hydroxyl group, an alkenyl group of 2 to 12 carbon atoms, a (meth)acryloyl group-containing group, or an unsubstituted or substituted monovalent hydrocarbon group free of aliphatic unsaturation, at least 0.1 of R² are alkenyl groups, 0.1 to 20 of R² are (meth)acryloyl group-containing groups, and e to h are each 0 or a positive number satisfying 2 ≤ e ≤ 202, 5 ≤ f ≤ 1,000, 0 ≤ g ≤ 100, and 0 ≤ h ≤ 100, provided that 0 ≤ g + h ≤ 100.
10. The curable organopolysiloxane composition for release sheets according to any one of 1 to 9, wherein component (B) is one or more organohydrogenpolysiloxanes represented by the following formula (4):

   R³ᵢHⱼSiO_{(4-i-j)/2} (4)

   wherein R³ is each independently an unsubstituted or substituted monovalent hydrocarbon group of 1 to 12 carbon atoms and free of aliphatic unsaturation, and i and j are positive numbers satisfying 0.7 ≤ i ≤ 2.1, 0.001 ≤ j ≤ 1.0, and 0.8 ≤ i + j ≤ 3.0.
11. The curable organopolysiloxane composition for release sheets according to any one of 1 to 9, wherein component (B) is a linear organohydrogenpolysiloxane represented by the following formula (5):

   (R3³_{S}iO1_{/2)}2₍R3^{H}SiO)p₍R3²_{S}iO)q (5)

   wherein R³ is as defined above, and p and q are integers satisfying 3 ≤ p ≤ 199 and 1 ≤ q ≤ 197, provided that 4 ≤ p + q ≤ 200.
12. The curable organopolysiloxane composition for release sheets according to 11, wherein component (B) is a combination of (B-1) the linear organohydrogenpolysiloxane represented by formula (5) and (B-2) a linear organohydrogenpolysiloxane represented by the following formula (6), and a mass ratio of component (B-2) to (B-1), (B-2)/(B-1), is 1 to 10:

   (R3³_{S}iO1_{/2)}2₍R3^{H}SiO)k (6)

   wherein R³ is as defined above, and k is an integer satisfying 1 ≤ k ≤ 200.
13. The curable organopolysiloxane composition for release sheets according to any one of 1 to 12, which is free of a solvent.
14. A release sheet comprising a sheet-like substrate and a cured film formed by curing the curable organopolysiloxane composition for release sheets according to any one of 1 to 13 on one surface or both surfaces of the substrate.

### ADVANTAGEOUS EFFECTS OF INVENTION

The organopolysiloxane composition of the invention undergoes no separation or precipitation of the addition reaction control agent even when stored at a low temperature such as 0°C or lower, has excellent low-temperature storability, has an excellent pot life at a high temperature, forms no gel during coating work on a coating roll and is excellent in thin film stability, has high curability when coated on various substrates, and further is excellent in adhesion to various substrates, and therefore can be suitably used as a material for release sheets.

### DESCRIPTION OF EMBODIMENTS

Now the invention is described in detail.

### [Component (A): Alkenyl Group-Containing Organopolysiloxane]

Component (A) is an organopolysiloxane having at least two silicon-bonded alkenyl groups per molecule, having a content of silicon-bonded alkenyl groups of 0.001 to 0.3 mol/100 g, and having a viscosity at 25°C of 1 to 10,000 mPa·s, and may be used alone or in combination of two or more.

Component (A) has at least two silicon-bonded alkenyl groups per molecule. When the number is less than two, there is a high possibility that uncrosslinked molecules remain even after curing, and curability is reduced. The content of silicon-bonded alkenyl groups is 0.001 to 0.3 mol/100 g, preferably 0.005 to 0.1 mol/100 g, more preferably 0.01 to 0.08 mol/100 g, and even more preferably 0.016 to 0.03 mol/100 g. When the content of silicon-bonded alkenyl groups is less than the above lower limit, curability may be reduced. On the other hand, when the content of silicon-bonded alkenyl groups exceeds the above upper limit, heavy release occurs (specifically, a strong force is required to peel the pressure-sensitive adhesive from the cured film); when the pressure-sensitive adhesive is attached to a release layer formed of the cured film and then peeled, the adhesive strength of the pressure-sensitive adhesive (hereinafter, referred to as residual adhesive strength) may be reduced.

Component (A) has a viscosity at 25°C of 1 to 10,000 mPa·s, preferably 5 to 5,000 mPa·s, more preferably 60 to 1,000 mPa·s, and even more preferably 100 to 500 mPa·s. When the viscosity of Component (A) is less than the above lower limit, the composition tends to be excessively wettable and spreadable, and the coating amount on the substrate surface tends to be insufficient. When the viscosity exceeds the above upper limit, the composition is less wettable and spreadable, and there is a risk that coatability to the substrate is reduced. In the invention, each viscosity is a value measured at 25°C using a rotational viscometer.

Component (A) is preferably a mixture comprising the following components (A-1) and (A-2). Components (A-1) and (A-2) may each be used alone or in combination of two or more. However, for component (A) as a whole, the content of silicon-bonded alkenyl groups is 0.001 to 0.3 mol/100 g, preferably 0.005 to 0.1 mol/100 g, more preferably 0.01 to 0.08 mol/100 g, and even more preferably 0.016 to 0.03 mol/100 g.
(A-1) An organopolysiloxane having two or more silicon-bonded alkenyl groups per molecule, and having a content of silicon-bonded alkenyl groups of 0.001 mol/100 g or more and less than 0.3 mol/100 g: 50 to 99.9 parts by mass, and
(A-2) An organopolysiloxane having 0.1 to 20 silicon-bonded (meth)acryloyl group-containing groups per molecule, and having 0.1 or more silicon-bonded alkenyl groups per molecule: 0.1 to 50 parts by mass.

Component (A-1) has at least two silicon-bonded alkenyl groups per molecule. The number is set to two or more, so that curability is further improved. Specifically, the content of silicon-bonded alkenyl groups is 0.001 mol/100 g or more and less than 0.3 mol/100 g, preferably 0.005 to 0.1 mol/100 g, more preferably 0.01 to 0.08 mol/100 g, and even more preferably 0.016 to 0.03 mol/100 g. When the content of silicon-bonded alkenyl groups is less than the above lower limit, curability may be reduced. When the content of silicon-bonded alkenyl groups exceeds the above upper limit, there is a risk that heavy release occurs and residual adhesive strength is reduced.

Component (A-1) is, for example, an organopolysiloxane represented by the following formula (2).

(R¹₃SiO_{1/2})ₐ(R¹₂SiO)_{b}(R¹SiO_{3/2})_{c}(SiO_{4/2})_{d} (2)

(wherein R¹ is each independently a hydroxyl group, an alkenyl group of 2 to 12 carbon atoms, or an unsubstituted or substituted monovalent hydrocarbon group free of aliphatic unsaturation, at least two of R¹ are alkenyl groups, and a to d are each 0 or a positive number satisfying 2 ≤ a ≤ 202, 5 ≤ b ≤ 1,000, 0 ≤ c ≤ 100, and 0 ≤ d ≤ 100, provided that 0 ≤ c + d ≤ 100.)

In formula (2), examples of the alkenyl group include a vinyl group, an allyl group, a butenyl group, a propenyl group, a 5-hexenyl group, an octenyl group, and a decenyl group. Among these, a vinyl group is preferred from an industrial viewpoint.

In formula (2), the unsubstituted or substituted monovalent hydrocarbon group free of aliphatic unsaturation is preferably such a group of 1 to 12 carbon atoms, more preferably such a group of 1 to 10 carbon atoms. Examples of the monovalent hydrocarbon group include alkyl groups such as a methyl group, an ethyl group, a propyl group, a butyl group, and an octyl group, cycloalkyl groups such as a cyclohexyl group, aryl groups such as a phenyl group, a tolyl group, a xylyl group, and a naphthyl group, aralkyl groups such as a benzyl group and a phenethyl group, and haloalkyl groups such as a chloropropyl group and a trifluoropropyl group in which some or all of hydrogen atoms of the foregoing are substituted with a halogen atom or the like. From the viewpoint of high curability and low release force, 80 mol% or more of all R¹ are preferably methyl groups.

In formula (2), the number of a, that is, the number of R¹₃SiO_{1/2} units, is 2 to 202, preferably 2 to 102, more preferably 2 to 32, and even more preferably 2 to 14. The number of b, that is, the number of R¹₂SiO units, is 5 to 1,000, preferably 10 to 500, more preferably 40 to 300, and even more preferably 60 to 200. When the number of R¹₂SiO units is less than the above lower limit, the viscosity of the organopolysiloxane, and consequently the viscosity of the resulting organopolysiloxane composition, becomes excessively low, and there is a risk that coatability is reduced. On the other hand, when the number of R¹₂SiO structural units exceeds the above upper limit, the viscosity of the resulting composition becomes excessively high, and there is a risk that coatability is reduced.

In formula (2), the numbers of c and d, that is, the number of R¹SiO_{3/2} units and the number of SiO_{4/2} units, are each independently 0 to 100, preferably 0 to 50, more preferably 0 to 10, and even more preferably 0 to 4. The value of c + d is 0 to 100, more preferably 0 to 50, even more preferably 0 to 20, and particularly preferably 0 to 8. When c + d exceeds 100, there is a risk that crosslinking density becomes excessively high, heavy release occurs, and residual adhesive strength is reduced.

Examples of the organopolysiloxane of component (A-1) include compounds represented by the following formulae.

(R¹₃SiO_{1/2})₂(R¹₂SiO)_{b}

(R¹₃SiO_{1/2})ₐ(R¹₂SiO)₃(R¹SiO_{3/2})_{c}

(R¹₃SiO_{1/2})ₐ(R¹₂SiO)₃(SiO_{4/2})_{d}

(R¹₃SiO_{1/2})ₐ(R¹₂SiO)₃(R¹SiO_{3/2})_{c}(SiO_{4/2})_{d}

In each of formulae, R¹ and a to d are as described above.

More specific examples include, but are not limited to, compounds represented by the following formulae. The bonding orders of the siloxane units indicated in the parentheses are not limited to those described below.

(ViMe₂SiO_{1/2})₂(Me₂SiO)_{Z1}

(5 ≤ Z1 ≤ 1,000)

(ViMe₂SiO_{1/2})₂(Me₂SiO)_{Z2}(ViMeSiO)_{Z3}

(0 ≤ Z2 ≤ 999, 1 ≤ Z3 ≤ 1,000, 5 ≤ Z2 + Z3 ≤ 1,000)

(ViMe₂SiO_{1/2})_{Z4}(Me₂SiO)_{Z5}(MeSiO_{3/2})_{Z6}

(3 ≤ Z4 ≤ 102, 5 ≤ Z5 ≤ 1,000, 1 ≤ Z6 ≤ 100)

(ViMe₂SiO_{1/2})_{Z7}(Me₂SiO)_{Z8}(MeSiO_{3/2})_{Z9}(SiO_{4/2})_{Z10}

(4 ≤ Z7 ≤ 202, 5 ≤ Z8 ≤ 1,000, 0 ≤ Z9 ≤ 100, 1 ≤ Z10 ≤ 100, 1 ≤ Z9 + Z10 ≤ 100)

In each of formulae, Me and Vi respectively mean a methyl group and a vinyl group.

Typical of component (A-2) is an organopolysiloxane represented by the following formula (3). Component (A-2) may be used alone or in combination of two or more.

(R2³_{S}iO1_{/2)}e₍R2²_{S}iO)f₍R2^{S}iO3_{/2)}g₍SiO4_{/2)}h (3)

(wherein R² is each independently a hydroxyl group, an alkenyl group of 2 to 12 carbon atoms, a (meth)acryloyl group-containing group, or an unsubstituted or substituted monovalent hydrocarbon group free of aliphatic unsaturation, at least 0.1 of R² are alkenyl groups, 0.1 to 20 of R² are (meth)acryloyl group-containing groups, and e to h are each 0 or a positive number satisfying 2 ≤ e ≤ 202, 5 ≤ f ≤ 1,000, 0 ≤ g ≤ 100, and 0 ≤ h ≤ 100, provided that 0 ≤ g + h ≤ 100.)

Component (A-2) is a component having an effect of increasing reactivity of the addition reaction in the invention; when component (A) is a mixture of components (A-1) and (A-2), curing can be performed with a smaller amount of platinum. The reason why the reactivity is increased is not clear, but coordination of a (meth)acryloyl group to a platinum group metal atom in some manner presumably provides the above effect.

Component (A-2) has at least 0.1 silicon-bonded alkenyl groups per molecule. When the number is less than 0.1, there is a high possibility that uncrosslinked molecules remain even after curing, and there is a risk that residual adhesive strength and adhesion to the substrate are reduced. Specifically, the content of silicon-bonded alkenyl groups is preferably 0.0001 to 0.15 mol/100 g, more preferably 0.001 to 0.13 mol/100 g, even more preferably 0.005 to 0.1 mol/100 g, and particularly preferably 0.01 to 0.08 mol/100 g. When the content of silicon-bonded alkenyl groups is less than the above lower limit, there is a risk that residual adhesive strength and adhesion to the substrate are reduced. When the content of silicon-bonded alkenyl groups exceeds the above upper limit, there is a risk that heavy release occurs and residual adhesive strength is reduced.

Component (A-2) has 0.1 to 20 silicon-bonded (meth)acryloyl group-containing groups per molecule. When the number is less than 0.1, curability may be reduced when the catalyst amount is reduced. When the number exceeds 20, there is a risk that compatibility with component (A-1) is reduced and cloudiness occurs. Specifically, the content of silicon-bonded (meth)acryloyl group-containing groups is preferably 0.0001 to 0.6 mol/100 g, more preferably 0.005 to 0.4 mol/100 g, even more preferably 0.01 to 0.2 mol/100 g, and particularly preferably 0.015 to 0.1 mol/100 g. When the content of silicon-bonded (meth)acryloyl group-containing groups is less than the above lower limit, there is a risk that the effect of increasing the reactivity of the addition reaction is reduced, and curability is reduced when the catalyst amount is reduced. When the content of silicon-bonded (meth)acryloyl group-containing groups exceeds the above upper limit, there is a risk that compatibility with component (A-1) is reduced and cloudiness occurs.

In formula (3), examples of the alkenyl group include the same as those specifically exemplified as the alkenyl groups in formula (2), and among these, a vinyl group is preferred from an industrial viewpoint. In formula (3), examples of the (meth)acryloyl group-containing group include (meth)acryloyl group-containing groups represented by CH₂=CR⁴COR⁵-. R⁴ is a hydrogen atom or a methyl group, with a hydrogen atom being preferred. R⁵ is a divalent group represented by OR⁶ or R⁶, with OR⁶ being preferred. R⁶ is a divalent organic group of 1 to 20 carbon atoms, and may have a branched or cyclic structure, and may contain an epoxy group, an ester bond, a urethane bond, an ether bond, an isocyanate bond, and a hydroxyl group. Examples of R⁶ include divalent hydrocarbon groups such as linear alkylene groups such as a methylene group, an ethylene group, a propylene group, a butylene group, a hexamethylene group, an octamethylene group, and a decylene group, branched alkylene groups such as a methylethylene group and a methylpropylene group, cyclic alkylene groups such as a cyclohexylene group, alkenylene groups such as a propenylene group, arylene groups such as a phenylene group, and aralkylene groups such as a methylenephenylene group and a methylenephenylene-methylene group. The divalent hydrocarbon group may include an ester bond, a urethane bond, an ether bond, and an isocyanate bond, and these may be used in combination. Furthermore, some or all of hydrogen atoms of these divalent hydrocarbon groups may be substituted with an epoxy group or a hydroxyl group. Among these, R⁶ is preferably a propylene group.

In formula (3), examples of the unsubstituted or substituted monovalent hydrocarbon group of 2 to 12 carbon atoms and free of aliphatic unsaturation include the same as those specifically exemplified as the unsubstituted or substituted monovalent hydrocarbon group of 2 to 12 carbon atoms and free of aliphatic unsaturation in formula (2). Among these, in order to increase curability and in order to reduce release force, 80 mol% or more of all R² are preferably methyl groups.

In formula (3), the number of e, that is, the number of R²₃SiO_{1/2} units, is 2 to 202, preferably 2 to 102, more preferably 2 to 32, and even more preferably 2 to 14. The number of f, that is, the number of R²₂SiO units, is 5 to 1,000, preferably 10 to 500, more preferably 40 to 300, and even more preferably 60 to 200. When the number of R²₂SiO units is less than the above lower limit, the viscosity of the organopolysiloxane, and consequently the viscosity of the resulting organopolysiloxane composition, becomes excessively low, and there is a risk that coatability is reduced. On the other hand, when the number of R²₂SiO units exceeds the above upper limit, the viscosity of the resulting composition becomes excessively high, and there is a risk that coatability is reduced.

In formula (3), the numbers of g and h, that is, the number of R²SiO_{3/2} units and the number of SiO_{4/2} units, are each independently 0 to 100, preferably 0 to 50, more preferably 0 to 10, and even more preferably 0 to 4. The value of g + h is 0 to 100, preferably 0 to 50, more preferably 0 to 20, and particularly preferably 0 to 8. When g + h exceeds 100, there is a risk that crosslinking density becomes excessively high and release force becomes high.

In component (A-2) of the invention, the bonding site of the (meth)acryloyl group-containing group may be either at a molecular chain end or at a side chain; however, the (meth)acryloyl group-containing group is preferably on a side chain, and particularly preferably bonded directly to, or via a hydrocarbon to, the silicon atom of an R²₂SiO unit (R² is as described above). Among these, the (meth)acryloyl group-containing group is preferably only on a side chain. The alkenyl group is preferably bonded to the silicon atom of an R²₃SiO_{1/2} unit or an R²₂SiO unit (R² is as described above). Examples of component (A-2) include organopolysiloxanes containing alkenyl groups at both ends, organopolysiloxanes containing alkenyl groups at one end and on side chains, organopolysiloxanes containing alkenyl groups at both ends and on side chains, branched organopolysiloxanes containing alkenyl groups at ends, organopolysiloxanes containing alkenyl groups at both ends and (meth)acryloyl groups on side chains, organopolysiloxanes containing alkenyl groups on side chains and (meth)acryloyl groups on side chains, organopolysiloxanes containing alkenyl groups at one end and on side chains and (meth)acryloyl groups on side chains, organopolysiloxanes containing alkenyl groups at both ends and on side chains and (meth)acryloyl groups on side chains, and branched organopolysiloxanes containing alkenyl groups at ends and (meth)acryloyl groups on side chains.

Examples of the organopolysiloxane of component (A-2) include compounds represented by the following formulae.

(R²₃SiO_{1/2})₂(R²₂SiO)_{f}

(R²₃SiO_{1/2})ₑ(R²₂SiO)₁(R₂SiO_{3/2})_{g}

(R²₃SiO_{1/2})ₑ(R²₂SiO)_{f}(SiO_{4/2})ₕ

(R²₃SiO_{1/2})ₑ(R²₂SiO)_{f}(R²SiO_{3/2})_{g}(SiO_{4/2})ₕ

(In each of formulae, R² and e to h are as described above.)

More specific examples include, but are not limited to, compounds represented by the following formulae. The bonding orders of the siloxane units indicated in the parentheses are not limited to those described below.

(ViMe₂SiO_{1/2})₂(Me₂SiO)_{Z11}(AMeSiO)_{Z12}

(0 ≤ Z11 ≤ 999.9, 0.1 ≤ Z12 ≤ 20, 5 ≤ Z11 + Z12 ≤ 1,000)

(ViMe₂SiO₁₂)₂(Me₂SiO)_{Z13}(ViMeSiO)_{Z14}(AMeSiO)_{Z15}

(0 ≤ Z13 < 999, 0 < Z14 < 1,000, 0.1 ≤ Z15 ≤ 20, 5 ≤ Z13 + Z14 + Z15 ≤ 1,000)

(ViMe₂SiO_{1/2})_{Z16}(Me₂SiO)_{Z17}(AMeSiO)_{Z18}(MeSiO_{3/2})_{Z19}

(3 ≤ Z16 ≤ 102, 0 ≤ Z17 ≤ 999.9, 0.1 ≤ Z18 ≤ 20, 5 ≤ Z17 + Z18 ≤ 1,000, 1 ≤ Z19 ≤ 100)

(ViMe₂SiO_{1/2})_{Z20}(Me₂SiO)_{Z21}(AMeSiO)_{Z22}(MeSiO_{3/2})_{Z23}(SiO_{4/2})_{Z24}

(4 ≤ Z20 ≤ 202, 0 ≤ Z21 ≤ 999.9, 0.1 ≤ Z22 ≤ 20, 5 ≤ Z21+Z22 ≤ 1,000, 0 ≤ Z23 ≤ 100, 1 ≤ Z24 ≤ 100, 1 ≤ Z23 + Z24 ≤ 100)

In each of formulae, Me, Vi, and A respectively mean a methyl group, a vinyl group, and a group represented by CH₂=CHCOOC₃H₆-.

The blending amount of component (A) is 90 to less than 100 parts by mass. For component (C) described later, its amount is specified based on the total of 100 parts by mass of components (A) and (B).

### [Component (B): Organohydrogenpolysiloxane]

Component (B) is an organohydrogenpolysiloxane having at least three silicon-bonded hydrogen atoms (hereinafter also referred to as "SiH groups") per molecule, having a content of silicon-bonded hydrogen atoms of 0.5 to 2.0 mol/100 g, and having a viscosity at 25°C of 2 to 200 mPa·s, which may be used alone or in combination of two or more. The SiH groups and the alkenyl groups of component (A) undergo an addition reaction to form a cured film.

Component (B) has SiH groups in a number such that the content thereof is 0.5 to 2.0 mol/100 g, and the hydrogen atom content is preferably 0.8 to 1.8 mol/100 g and more preferably 1.0 to 1.6 mol/100 g. When the SiH content is less than the above lower limit, there is a risk that the amount of SiH groups in the composition becomes small and curability is reduced. When the SiH content exceeds the above upper limit, there is a risk that crosslinking density becomes excessively high and release force becomes high.

Component (B) has a viscosity at 25°C of 2 to 200 mPa·s, preferably 5 to 180 mPa·s, and more preferably 10 to 150 mPa·s. When the viscosity of component (B) is less than the above lower limit, there is a risk that adhesion to the substrate is reduced; when the viscosity exceeds the above upper limit, there is a risk that reactivity is reduced.

Typical of component (B) is an organohydrogenpolysiloxane represented by the following formula (4), and the organohydrogenpolysiloxane may be linear, branched, or cyclic.

R³iHⱼSiO_{(4-i-j)/2} (4)

(wherein R³ is each independently an unsubstituted or substituted monovalent hydrocarbon group of 1 to 12 carbon atoms and free of aliphatic unsaturation, and i and j are positive numbers satisfying 0.7 ≤ i ≤ 2.1, 0.001 ≤ j ≤ 1.0, and 0.8 ≤ i + j ≤ 3.0.)

In formula (4), R³ is each independently an unsubstituted or substituted monovalent hydrocarbon group of 1 to 12 carbon atoms, preferably 1 to 10 carbon atoms, and free of aliphatic unsaturation, and examples thereof include alkyl groups such as a methyl group, an ethyl group, a propyl group, a butyl group, and an octyl group; cycloalkyl groups such as a cyclopentyl group and a cyclohexyl group; aryl groups such as a phenyl group, a tolyl group, a xylyl group, and a naphthyl group; aralkyl groups such as a benzyl group and a phenethyl group; and monovalent hydrocarbon groups in which some or all of hydrogen atoms bonded to carbon atoms of the foregoing groups are substituted with a hydroxy group, a halogen atom, an alkoxysilyl group, a polyoxyalkylene group, an epoxy group, a carboxyl group, or the like. R³ is preferably an alkyl group and more preferably a methyl group; however, from the viewpoints that curability is high and release force is low, 50 mol% or more, typically 60 to 100 mol%, of all R³ are preferably methyl groups. When the proportion of methyl groups is less than 50 mol% of all R³, compatibility with component (A) is poor, and the curable organopolysiloxane composition may become cloudy or may undergo phase separation.

In formula (4), i is a positive number satisfying 0.7 ≤ i ≤ 2.1, preferably 0.8 ≤ i ≤ 2.1, and more preferably 1.0 ≤ i ≤ 2.0; j is a positive number satisfying 0.001 ≤ j ≤ 1.0, preferably 0.005 ≤ j ≤ 1.0, and more preferably 0.01 ≤ j ≤ 0.98; and i + j is a positive number satisfying 0.8 ≤ i + j ≤ 3.0, preferably 1.0 ≤ i + j ≤ 2.8, and more preferably 1.3 ≤ i + j ≤ 2.5.

As component (B), a linear organohydrogenpolysiloxane represented by the following formula (5) is preferably used alone.

(R³₃SiO_{1/2})₂(R³HSiO)ₚ(R³₂SiO)_{q} (5)

(wherein R³ is as described above, p and q are integers satisfying 3 ≤ p ≤ 199 and 1 ≤ q ≤ 197, provided that p and q satisfy 4 ≤ p + q ≤ 200.)

The linear organohydrogenpolysiloxane represented by formula (5) acts as a component that improves curability when forming a cured film by an addition reaction with the alkenyl groups of component (A). Therefore, the linear organohydrogenpolysiloxane represented by formula (5) can be used alone to thereby provide an organopolysiloxane composition having more excellent curability.

In order to achieve both curability and adhesion, component (B) is preferably a combination of (B-1) the linear organohydrogenpolysiloxane represented by formula (5) and (B-2) a linear organohydrogenpolysiloxane represented by the following formula (6).

(R³₃SiO_{1/2})₂(R³HSiO)ₖ (6)

(wherein R³ is as described above, and k is an integer satisfying 1 ≤ k ≤ 200.)

Component (B-2) can also form a cured film by an addition reaction with the alkenyl groups of component (A); however, component (B-2) is a component that improves adhesion between the cured film and the substrate. Therefore, the combined use of component (B-1) and component (B-2) can provide an organopolysiloxane composition excellent in adhesion of the cured film to the substrate and curability. The mass ratio of component (B-2) to (B-1), (B-2)/(B-1), is 1 to 10, preferably 1.1 to 8.0, and more preferably 1.2 to 5.0. When the mass ratio (B-2)/(B-1) is set to be the above upper limit or less, adhesion of the cured film to the substrate is further improved; when the mass ratio is set to be the above lower limit or more, curability is further improved.

In formulae (5) to (6), R³ may be the same as those specifically exemplified above as R³ in formula (3), and is preferably an alkyl group and more preferably a methyl group. From the viewpoints that curability is high and release force is low, 50 mol% or more, typically 60 to 100 mol%, of all R³ are preferably methyl groups.

In formulae (5) to (6), p is an integer satisfying 3 ≤ p ≤ 199, preferably 5 ≤ p ≤ 180, and more preferably 10 ≤ p ≤ 150; q is an integer satisfying 1 ≤ q ≤ 197, preferably 5 ≤ q ≤ 180, and more preferably 10 ≤ q ≤ 150; and p + q is an integer satisfying 4 ≤ p + q ≤ 200, preferably 5 ≤ p + q ≤ 180, and more preferably 10 ≤ p + q ≤ 150. Further, k is an integer satisfying 1 ≤ k ≤ 200, preferably 3 ≤ k ≤ 180, and more preferably 5 ≤ k ≤ 150.

Examples of component (B) include, but are not limited to, the following compounds. The bonding orders of the siloxane units indicated in the parentheses are not limited to the following.

(Me₂SiO_{1/2})₂(MeHSiO)_{Z25}

(3 ≤ Z25 ≤ 200)

(Me₂SiO_{1/2})₂(MeHSiO)_{Z26}(Me2SiO)_{Z27}

(3 ≤ Z26 ≤ 199, 1 ≤ Z27 ≤ 197,4 ≤ Z26 + Z27 ≤ 200)

(Me₂SiO_{1/2})_{Z28}(MeHSiO)_{Z29}(Me2SiO)_{Z30}(MeSiO_{3/2})_{Z31}

(3 ≤ Z28 ≤ 52, 3 ≤ Z29 ≤ 200, 0 ≤ Z30 ≤ 197, 3 ≤ Z29 + Z30 ≤ 200, 1 ≤ Z31 ≤ 50)

(Me₂SiO_{1/2})_{Z32}(MeHSiO)_{Z33}(Me2SiO)_{Z34}(MeSiO₃₁₂)_{Z3S}(SiO₄₁₂)_{Z36}

(4 ≤ Z32 ≤ 102, 3 ≤ Z33 ≤ 200, 0 ≤ Z34 ≤ 197, 3 ≤ Z33 + Z34 ≤ 200, 0 ≤ Z35 ≤ 50, 1 ≤ Z36 ≤ 50, 1 ≤ Z35 + Z36 ≤ 50)

In each of formulae, Me and H respectively mean a methyl group and a hydrogen atom.

The blending amount of component (B) is an amount such that the ratio of the number of silicon-bonded hydrogen atoms in component (B) to the number of alkenyl groups in component (A) is 0.5 to 5.0, preferably 1.0 to 4.0, and more preferably 1.2 to 3.0. When the amount of component (B) is less than the above lower limit, curability becomes insufficient. When the amount exceeds the above upper limit, since the amount of remaining SiH groups increases, problems such as an increase in release force occur.

### [Component (C): Addition Reaction Control Agent]

Component (C) is an addition reaction control agent for a platinum group metal-based catalyst, and a combination of the following (C-1) and (C-2) is used. Each of (C-1) and (C-2) may be used alone or in combination of two or more.
(C-1) An acetylenic alcohol having a boiling point of 150 to 189°C and represented by the following formula (1) 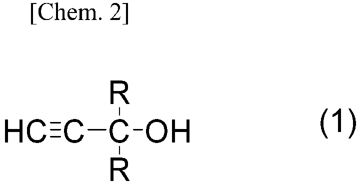 (wherein R is each independently a hydrogen atom or an unsubstituted or substituted monovalent hydrocarbon group free of aliphatic unsaturation, and two R may be bonded to each other to form a ring.)
(C-2) A compound having a refractive index at 25°C of 1.420 to 1.450 and a boiling point of 190°C or higher

(C-1), which is an acetylenic alcohol having a boiling point of 150 to 189°C and represented by formula (1), is a control agent widely used because of high control ability for the addition reaction and ease of availability.

The combined use effect of component (C-1) and component (C-2) is as described above; however, it is believed that component (C-2) not only functions as an addition reaction control agent, but also functions as a compatibilizer that makes component (C-1) more easily dissolvable in the organopolysiloxane composition.

Component (C-1) is an acetylenic alcohol having a boiling point of 150 to 189°C, preferably 150 to 185°C, and more preferably 150 to 180°C, and represented by the following formula (1) 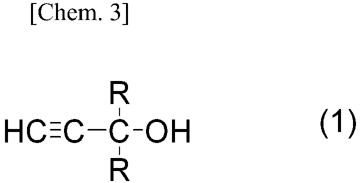 (wherein R is each independently a hydrogen atom or an unsubstituted or substituted monovalent hydrocarbon group free of aliphatic unsaturation, and two R may be bonded to each other to form a ring.)

In formula (1), the unsubstituted or substituted monovalent hydrocarbon group free of aliphatic unsaturation is preferably a group of 1 to 8 carbon atoms, and more preferably a group of 1 to 5 carbon atoms. Examples of the monovalent hydrocarbon group include alkyl groups such as a methyl group, an ethyl group, a propyl group, a butyl group, and an octyl group; cycloalkyl groups such as a cyclohexyl group; aryl groups such as a phenyl group, a tolyl group, and a xylyl group; aralkyl groups such as a benzyl group and a phenethyl group; and haloalkyl groups such as a chloropropyl group and a trifluoropropyl group in which some or all of hydrogen atoms of the foregoing are substituted with a halogen atom or the like. The total number of carbon atoms of two R is preferably 8 or less, and more preferably 5 or less. When the total number of carbon atoms of two R exceeds 8, there is a risk that initial curability decreases. More specifically, component (C-1) is preferably 1-ethynyl-1-cyclohexanol (refractive index: 1.481, boiling point: 174°C) or 3,5-dimethyl-1-hexyn-3-ol (refractive index: 1.434, boiling point: 150°C), in view of control ability for the addition reaction and ease of availability.

Component (C-2) is a compound having a refractive index at 25°C of 1.420 to 1.450 and a boiling point of 190°C or higher. The refractive index is preferably 1.422 to 1.449 and more preferably 1.424 to 1.448. Specific examples include bis(1,1-dimethyl-2-propynyloxy)dimethylsilane (refractive index: 1.424, boiling point: 190°C), 1,3,5,7-tetramethyl-1,3,5,7-tetravinylsiloxane (refractive index: 1.432, boiling point: about 240°C), and 3-methyl-1-dodecyn-3-ol (refractive index: 1.448, boiling point: about 270°C).

The total blending amount of component (C) is 0.06 to 0.60 parts by mass based on the total of 100 parts by mass of components (A) and (B), preferably 0.08 to 0.50 parts by mass, more preferably 0.10 to 0.31 parts by mass, particularly preferably 0.15 to 0.26 parts by mass, and most preferably 0.18 to 0.23 parts by mass. When the blending amount of component (C) exceeds the above upper limit, curability may decrease; when the blending amount is less than the above lower limit, pot life and adhesion may decrease.

The blending amount of component (C-1) is 0.02 to 0.40 parts by mass based on the total of 100 parts by mass of components (A) and (B), preferably 0.03 to 0.36 parts by mass, more preferably 0.05 to 0.30 parts by mass, even more preferably 0.06 to 0.25 parts by mass, and particularly preferably 0.08 to 0.18 parts by mass. When the blending amount of component (C-1) exceeds the above upper limit, compatibility may decrease; when the blending amount is less than the above lower limit, pot life and adhesion may decrease.

The blending amount of component (C-2) is 0.02 to 0.40 parts by mass based on the total of 100 parts by mass of components (A) and (B), preferably 0.02 to 0.36 parts by mass, more preferably 0.03 to 0.25 parts by mass, even more preferably 0.034 to 0.12 parts by mass, and particularly preferably 0.05 to 0.09 parts by mass. When the content of component (C-2) exceeds the above upper limit, curability may decrease; when the content is less than the above lower limit, gel may be formed during coating work on a coating roll.

The mass ratio of (C-2) to (C-1), (C-2)/(C-1), is 0.10 to 5.00, preferably 0.15 to 2.60, more preferably 0.20 to 2.00, even more preferably 0.24 to 1.50, and particularly preferably 0.28 to 1.00. When the mass ratio (C-2)/(C-1) exceeds the above upper limit, curability may decrease; when the mass ratio is less than the above lower limit, gel may be formed during coating work on a roll.

### [(D) Platinum Group Metal-Based Catalyst]

Component (D), which is a platinum group metal-based catalyst, is a catalyst for promoting the addition reaction between component (A) and component (B), and any catalyst known to those skilled in the art as a so-called hydrosilylation reaction promoter can be used. The platinum group metal-based catalyst may be used alone or in combination of two or more. Examples of such a platinum group metal-based catalyst include platinum-based, palladium-based, rhodium-based, and ruthenium-based catalysts, and among these, particularly platinum-based catalysts are preferably used. Examples of the platinum-based catalysts include chloroplatinic acid, alcohol solutions or aldehyde solutions of chloroplatinic acid, complexes of chloroplatinic acid with various olefins or vinylsiloxanes, and complexes of platinum with various olefins or vinylsiloxanes.

The blending amount of component (D) may be any so-called effective amount as a catalyst. For example, in order to obtain a favorable cured film and from an economical viewpoint, the blending amount is 0.1 to 200 ppm (by mass), preferably 0.5 to 150 ppm, more preferably 1 to 100 ppm, and particularly preferably 2 to 50 ppm, in terms of mass of platinum group metal based on the total mass of components (A) to (C). In the invention, when component (A) is limited to a (meth)acryloyl group-containing organopolysiloxane and component (B) is limited to only the linear organohydrogenpolysiloxane represented by formula (3), the blending amount of component (D) can be set to 20 ppm or less, in terms of mass of platinum group metal based on the total mass of components (A) to (C).

### [Other Components]

In the curable organopolysiloxane composition of the invention, in addition to the above components (A) to (D), other optional components can be blended as long as the benefits of the invention are not impaired. Examples include the following components. Each of these other components may be used alone or in combination of two or more.

### Alkenyl Group-Containing Compound Other Than Component (A)

In addition to component (A), an alkenyl group-containing compound that undergoes an addition reaction with component (B) may be appropriately blended within a range not impairing the benefits of the invention. Such an alkenyl group-containing compound other than component (A) is preferably a compound involved in formation of a cured product, and may be an organopolysiloxane, other than component (A), having at least one alkenyl group per molecule. The molecular structure thereof may be, for example, any of linear, cyclic, branched, and three-dimensional network structures. Further, an alkenyl group-containing organic compound other than the above organopolysiloxane may be blended. Examples include monomers such as α-olefins, butadienes, and diacrylates derived from polyfunctional alcohols; polyolefins such as copolymers of polyethylene, polypropylene, or styrene with another ethylenically unsaturated compound (for example, acrylonitrile or butadiene); and oligomers or polymers derived from functionally substituted organic compounds such as acrylic acid or methacrylic acid. These alkenyl group-containing compounds may be liquid or solid at room temperature.

When the alkenyl group-containing compound other than component (A) is blended, the blending amount is preferably 0.1 to 60 parts by mass, more preferably 0.5 to 30 parts by mass, and even more preferably 1.0 to 10 parts by mass, based on the total of 100 parts by mass of components (A) and (B).

### [Other Optional Component]

For the purpose of imparting lubricity, a high-molecular-weight linear organopolysiloxane other than components (A) and (B) may be blended; and for the purpose of adjusting the release force, an organopolysiloxane resin having an aryl group other than components (A) and (B), an organopolysiloxane resin, silica, a low-molecular-weight organopolysiloxane not having a silicon-bonded hydrogen atom or an alkenyl group, or the like may be blended. Further, within a range not impairing the benefits of the invention, known antioxidants, pigments, stabilizers, antistatic agents, antifoaming agents, adhesion improvers, thickeners, and inorganic fillers such as silica can be blended as necessary. When such an optional component is blended, the amount thereof may be 0.01 to 10 parts by mass, is preferably 0.05 to 6 parts by mass, and more preferably 0.1 to 3 parts by mass, based on the total of 100 parts by mass of components (A) and (B).

A solvent can also be blended in the curable organopolysiloxane composition of the invention; however, from the viewpoints of environmental consideration and influence on the human body, the blending amount is preferably 10 parts by mass or less, more preferably 3 parts by mass or less, and even more preferably none, based on the total of 100 parts by mass of components (A) and (B). Examples include organic solvents (not including siloxane solvents) soluble in organopolysiloxane, such as toluene, hexane, xylene, and methyl ethyl ketone (also referred to as 2-butanone), and low-viscosity cyclic siloxanes such as octamethyltetrasiloxane and decamethylpentasiloxane.

The viscosity at 25°C of the curable organopolysiloxane composition of the invention as measured using a rotational viscometer is preferably 10 to 500 mPa·s, more preferably 30 to 450 mPa·s, and even more preferably 50 to 400 mPa·s. When the viscosity is set within the above range, coatability onto a substrate is further improved.

### [Form of Curable Organopolysiloxane Composition]

The curable organopolysiloxane composition of the invention can be, for example, a two-part curable organopolysiloxane composition for release sheets or a three-part curable organopolysiloxane composition for release sheets, from the viewpoint of reducing labor for blending and reducing charging mistakes. Various two-part or three-part forms are conceivable; however, the platinum catalyst undergoes dehydrogenation when coming into contact with the crosslinking agent and undergoes generation of platinum black (an aggregate of platinum) when coming into contact with the control agent, and hence these raw materials cannot be mixed in advance. From the viewpoint that fine adjustment of the crosslinking agent amount and the platinum catalyst amount can be performed and labor for weighing and charging mistakes can be reduced, the three-part form is preferred. However, when the two-part or three-part form is employed, the control agent (C) is blended at a high concentration in each part, and thus separation or precipitation of the control agent (C) over time becomes more pronounced. In particular, when stored at a low temperature such as 0°C or lower, this tendency tends to become pronounced; thus, in the two-part or three-part form, the effects of the invention are more effectively exhibited. Notably, in the case of the two-part or three-part form, the above-mentioned amounts of components are also based on the total amount of the two-part or three-part composition (the entirety of the curable organopolysiloxane composition).

In the case of the two-part curable organopolysiloxane composition for release sheets, a composition comprising the following liquid composition 2-1 and liquid composition 2-2 is preferred.

The liquid composition 2-1 contains component (A) and component (D), and
the liquid composition 2-2 contains component (B) and component (C) and optionally contains component (A).

In the case of the three-part curable organopolysiloxane composition for release sheets, combinations comprising the following liquid composition 3-1, liquid composition 3-2, and liquid composition 3-3 are preferred.
(I) The liquid composition 3-1 consists of component (A) alone,
   the liquid composition 3-2 contains component (B), component (C), and optionally component (A), and
   the liquid composition 3-3 contains component (D) and optionally component (A).
(II) The liquid composition 3-1 contains component (A) and component (C),
   the liquid composition 3-2 contains component (B) and optionally component (A), and
   the liquid composition 3-3 contains component (D) and optionally component (A).

The phrase "consists of component (A) alone" means that component (A) contains none of components (B) to (D) and the other optional components.

When optional components are blended, the optional components are preferably blended into the liquid composition 2-2, the liquid composition 3-1, or the liquid composition 3-2. Since some of the other components react or interact with the platinum catalyst of component (D), problems may be caused by blending and storing together with component (D).

The optional components (A) in the liquid compositions are components for adjusting the blending amounts of the compositions; due to the presence of the optional components (A), for example, the mixing ratios can be adjusted to easy-to-understand mixing ratios such as, in the case of the two-part form, liquid composition 2-1/liquid composition 2-2 = 90/10 (parts by mass) and, in the case of the three-part form, liquid composition 3-1/liquid composition 3-2/liquid composition 3-3 = 90/10/2 (parts by mass). As a result, fine weighing of various raw materials at the time of use becomes unnecessary, and labor for blending and charging mistakes can be reduced. In the case of the three-part curable organopolysiloxane composition, from the viewpoint of pot life, a method is preferred in which the liquid composition 3-1 and the liquid composition 3-2 are uniformly mixed in advance, and then the liquid composition 3-3 is added immediately before use.

### [Production Method]

The organopolysiloxane composition of the invention is obtained by mixing predetermined amounts of components (A), (B), (C), and (D) and, as necessary, optional components; in the case of the two-part or three-part form, the components are separately mixed.

### [Coated Product (Release Sheet)]

The invention further provides a release sheet comprising a sheet-like substrate and a cured film formed by curing the above curable organopolysiloxane composition for release sheets on one surface or both surfaces of the substrate surface. The cured film can be formed by applying the above curable organopolysiloxane composition onto one surface or both surfaces of the substrate surface and heating the curable organopolysiloxane composition.

The coating method and the heat-curing conditions are not particularly limited, and may be appropriately selected. For example, the curable organopolysiloxane composition as prepared is applied onto one surface or both surfaces of a sheet-like substrate such as paper or a film in an amount of 0.01 to 100 g/m² by a coating method such as coating using a comma coater, a lip coater, a roll coater, a die coater, a knife coater, a blade coater, a rod coater, a kiss coater, a gravure coater, a wire bar coater, or the like, screen coating, dip coating, cast coating, or the like, and then heated at 50 to 200°C for 1 to 120 seconds, to thereby form a cured film on the substrate. When release layers are formed on both surfaces of the substrate, the cured film forming operation is preferably performed on each surface of the substrate.

In the invention, the release sheet includes not only sheets in which the sheet-like substrates are paper, but also sheets in which the sheet-like substrates are formed of various known films or the like. Examples of the substrate include polyethylene-laminated paper, glassine paper, high-quality paper, kraft paper, clay-coated paper and various other coated papers, synthetic paper such as YUPO, polyethylene films, polypropylene films such as CPP and OPP, polyester films such as polyethylene terephthalate films, polyamide films, polyimide films, polylactic acid films, polyphenol films, and polycarbonate films. Alternatively, the substrate can be process paper for manufacturing artificial leather, a ceramic sheet, a double-sided separator, or the like. In order to improve adhesion between such a substrate and the release layer, a substrate surface subjected to corona treatment, etching treatment, primer treatment, or plasma treatment may be used.

### EXAMPLES

Examples and Comparative Examples are described below to explain the invention in more detail; however, the invention is not limited to the following Examples. The viscosities described below are values measured at 25°C using a rotational viscometer; and the refractive index was measured at 25°C as a refractive index at 589 nm using a digital refractometer RX-9000α manufactured by ATAGO CO., LTD. Me, Vi, and A respectively represent a methyl group, a vinyl group, and a group represented by CH₂=CHCOOC₃H₆-. In the following examples, unless otherwise specified, "%" in compositions indicates mass%, and ratios indicate mass ratios.

The components used in Examples and Comparative Examples are as follows. In the following, the vinyl value is moles of vinyl groups in 100 g of each component, the SiH content is moles of SiH groups in 100 g of each component, and the content of acryloyl group-containing groups is moles of groups represented by CH₂=CHCOOC₃H₆-in 100 g of each component. The bonding orders of the siloxane units indicated in parentheses are not limited to the following.

### Component (A)

(A-1-1)
   A methylvinylpolysiloxane capped at both ends of the molecular chain with dimethylvinylsiloxy groups, and having a vinyl value of 0.018 mol/100 g and a viscosity of 380 mPa·s: (ViMe₂SiO_{1/2})₂(Me₂SiO)₁₅₀
(A-1-2)
   A methylvinylpolysiloxane having one branched chain, capped at three ends of the molecular chain with dimethylvinylsiloxy groups, and having a vinyl value of 0.025 mol/100 g and a viscosity of 260 mPa·s: (ViMe₂SiO_{1/2})₃(Me₂SiO)₁₆₀(MeSiO_{3/2})₁
(A-2-1)
   An acryloyl group-containing methylvinylpolysiloxane capped at both ends of the molecular chain with dimethylvinylsiloxy groups, having acryloyl group-containing groups on side chains, and having a vinyl value of 0.016 mol/100 g, a content of acryloyl group-containing groups of 0.077 mol/100 g, and a viscosity of 450 mPa·s:

   (ViMe₂SiO_{1/2})₂(Me₂SiO)₁₅₀(AMeSiO)₁₀

### Component (B)

(B-1-1)
   A methylhydrogenpolysiloxane capped at both ends of the molecular chain with trimethylsiloxy groups, and having an SiH content of 1.6 mol/100 g and a viscosity of 20 mPa·s: (Me₃SiO_{1/2})₂(MeHSiO)₄₀
(B-2-1)
   A methylhydrogenpolysiloxane capped at both ends of the molecular chain with trimethylsiloxy groups, and having an SiH content of 1.0 mol/100 g and a viscosity of 50 mPa·s: (Me₃SiO_{1/2})₂(MeHSiO)₄₅(Me₂SiO)₂₀
(B-2-2)
   A methylhydrogenpolysiloxane capped at both ends of the molecular chain with trimethylsiloxy groups, and having an SiH content of 1.1 mol/100 g and a viscosity of 140 mPa·s: (Me₃SiO_{1/2})₂(MeHSiO)₈₀(Me₂SiO)₄₀

### Component (C)

(C-1-1)
   1-ethynyl-1-cyclohexanol (refractive index: 1.481, boiling point: 174°C)
(C-1-2)
   3,5-dimethyl-1-hexyn-3-ol (refractive index: 1.434, boiling point: 150°C)
(C-2-1)
   bis(1,1-dimethyl-2-propynyloxy)dimethylsilane (refractive index: 1.424, boiling point: 190°C)
(C-2-2)
   1,3,5,7-tetramethyl-1,3,5,7-tetravinylsiloxane (refractive index: 1.432, boiling point: about 240°C)
(C-2-3)
   3-methyl-1-dodecyn-3-ol (refractive index: 1.448, boiling point: about 270°C)

### • Components for Comparative Examples

(Comparative Component c-1)
   3-methyl-1-butyn-3-ol (refractive index: 1.419, boiling point: 104°C)
(Comparative Component c-2)
   2-methyl-3-butyn-2-oxytrimethylsilane (refractive index: 1.403, boiling point: 115°C)
(Comparative Component c-3)
   diallyl maleate (refractive index: 1.467, boiling point: about 290°C)

### [Preparation Example 1] Preparation of Platinum Catalyst D

A reaction product of hexachloroplatinic acid and 1,3-divinyltetramethyldisiloxane was diluted with the above methylvinylpolysiloxane (A-1-2) so as to provide a platinum content of 0.50%, to thereby prepare a platinum catalyst D used in the present Examples and Comparative Examples.

### [Example 1]

For the liquid composition 3-2, 7.01 parts by mass of the above methylvinylpolysiloxane (A-1-2), 2.81 parts by mass of the above methylhydrogenpolysiloxane (B-2-1), 0.09 parts by mass of the above addition reaction control agent (C-1-1), and 0.09 parts by mass of the above addition reaction control agent (C-2-1) were added and agitated until uniform. The resultant liquid composition 3-2 was examined for low-temperature storage stability by a method described later.

To 90 parts by mass of the above methylvinylpolysiloxane (A-1-1) as the liquid composition 3-1, 10 parts by mass of the above liquid composition 3-2 was added and agitated until uniform. Thereafter, the above platinum catalyst D obtained in Preparation Example 1 was added as the liquid composition 3-3 in such an amount as to give 25 ppm in terms of platinum based on the total mass of the liquid compositions 3-1 and 3-2, and mixed, to thereby provide an organopolysiloxane composition having a viscosity of 340 mPa·s. In this composition, the number ratio (H/Vi) of SiH groups in component (B) to vinyl groups in component (A) was 1.6.

### [Examples 2 to 12 and Comparative Examples 1 to 10]

In the same process as in Example 1, the components were mixed in proportions (parts by mass) shown in Tables 1 to 4 to obtain organopolysiloxane compositions of Examples 2 to 12 and Comparative Examples 1 to 10. For the organopolysiloxane compositions of Examples 2 to 12 and Comparative Examples 1 to 10, the number ratios (H/Vi) of SiH groups in component (B) to vinyl groups in component (A) are shown in Tables 1 to 4.

### [Example 13]

For the liquid composition 3-1, 98.82 parts by mass of the above methylvinylpolysiloxane (A-1-1), 1 part by mass of the above acryloyl group-containing methylvinylpolysiloxane (A-2-1), 0.09 parts by mass of the above addition reaction control agent (C-1-1), and 0.09 parts by mass of the above addition reaction control agent (C-2-1) were added and agitated until uniform. The resultant liquid composition 3-1 was examined for low-temperature storage stability by a method described later. Further, to 100 parts by mass of the above liquid composition 3-1, 2.81 parts by mass of the above methylhydrogenpolysiloxane (B-2-1) as the above liquid composition 3-2 was added and agitated until uniform. Thereafter, the above platinum catalyst D obtained in Preparation Example 1 was added as the liquid composition 3-3 in such an amount as to give 12 ppm in terms of platinum based on the total mass of the above liquid compositions 3-1 and 3-2, and mixed, to thereby provide an organopolysiloxane composition having a viscosity of 380 mPa·s. In this composition, the number ratio (H/Vi) of SiH groups in component (B) to vinyl groups in component (A) was 1.6.

### [Examples 14 to 24 and Comparative Examples 11 to 21]

In the same process as in Example 13, the components were mixed in proportions (parts by mass) shown in Tables 5 to 8 to obtain organopolysiloxane compositions of Examples 14 to 24 and Comparative Examples 11 to 21. For the organopolysiloxane compositions of Examples 14 to 24 and Comparative Examples 11 to 21, the number ratios (H/Vi) of SiH groups in component (B) to vinyl groups in component (A) are shown in Tables 5 to 8.

### [Example 25]

For a liquid composition 1, 0.5 parts by mass of the above platinum catalyst D obtained in Preparation Example 1 was added to 89.5 parts by mass of the above methylvinylpolysiloxane (A-1-1) and agitated until uniform. Further, for a liquid composition 2, 6.88 parts by mass of the above methylvinylpolysiloxane (A-1-2), 2.81 parts by mass of the above methylhydrogenpolysiloxane (B-2-1), 0.25 parts by mass of the above addition reaction control agent (C-1-1), and 0.06 parts by mass of the above addition reaction control agent (C-2-1) were added and agitated until uniform. The resultant liquid composition 2 was examined for low-temperature storage stability by a method described later. Thereafter, 10 parts by mass of the above liquid composition 2 was added to 90 parts by mass of the above liquid composition 1 and agitated until uniform. The resultant organopolysiloxane composition had a viscosity of 330 mPa·s, and the number ratio (H/Vi) of SiH groups in component (B) to vinyl groups in component (A) was 1.6.

### [Example 26 and Comparative Examples 22 to 25]

In the same process as in Example 25, the components were mixed in proportions (parts by mass) shown in Table 9 to obtain organopolysiloxane compositions of Example 26 and Comparative Examples 22 to 25. For the organopolysiloxane compositions of Example 26 and Comparative Examples 22 to 25, the number ratios (H/Vi) of SiH groups in component (B) to vinyl groups in component (A) were each 1.6.

For the above organopolysiloxane compositions, the viscosity at 25°C was measured. Further, methods described below were used to measure low-temperature storage stability of the liquid compositions 3-2, 3-1, and 2, and pot life and storage stability in thin film of the organopolysiloxane compositions. The results are shown in Tables 1 to 9.

### [Low-Temperature Storage Stability (Low-Temperature Storability)]

The liquid compositions 2-2, 3-1, and 3-2, each weighing 10 g, were placed in a 25 g wide-mouth transparent glass bottle manufactured by HORIUCHI GARASU Co., Ltd., and stored under sealing at -3°C for 1 day, and then evaluated according to the following criteria.
∘: Good (for the components, no separation and no generation of precipitates)
×: Poor (for the components, separation or generation of precipitates occurred)

### [Pot Life]

The organopolysiloxane compositions, each weighing 10 g, were placed in a 25 g wide-mouth transparent glass bottle manufactured by HORIUCHI GARASU Co., Ltd., stored under open conditions at 50°C for 20 hours, and then evaluated according to the following criteria.
∘: Good (no pronounced increase in viscosity and no formation of gel)
×: Poor (pronounced increase in viscosity or formation of gel occurred)

### [Storage Stability in Thin Film (Thin Film Stability)]

The organopolysiloxane compositions were applied onto a PET film having a thickness of 38 µm using an applicator to a thickness of 10 µm. Thereafter, the compositions were left for 100 minutes at 25°C and evaluated according to the following criteria.
∘: Good (the composition remained liquid overall, with no stringing or hardened areas)
×: Poor (stringing or hardened areas occurred, either partially or entirely)

Further, a method described below was used to produce release sheets, which were evaluated for curability, release force, subsequent adhesion, and adhesion. The results are shown in Tables 1 to 9.

### [Curing of Organopolysiloxane Compositions]

The organopolysiloxane compositions were applied onto a metal roll of an RI tester (manufactured by IHI Machinery & Furnace Co., Ltd.); the metal roll was pressed against a rubber roll, then the two rolls were rotated for 45 seconds to uniformly stretch the composition, and thereafter the composition was transferred from the rubber roll to polyethylene-laminated paper. The polyethylene-laminated paper having the composition transferred thereto was heated in a hot-air dryer at 110°C for 20 seconds, completing a release paper bearing a cured film having a thickness of 0.9-1.1 g/m².

### [Curability]

Immediately after taking out the release paper obtained by the above curing method from the dryer, the cured film surface of the release paper was intensely rubbed with the forefinger 10 cycles. With red marker ink applied to the film surface, ink concentration and the cured film state were observed.

The results are evaluated according to the following rating and are described in Tables 1 to 5.
∘: the finger mark was substantially unperceived (that is, curability is good),
△: the finger mark was slightly perceived (that is, curability is insufficient), and
×: the finger mark looked dense (that is, curability is poor).

### [Adhesion After Heat-and-Humidity Aging]

After the release paper obtained by the above curing method was aged at 25°C for 24 hours, the release paper was stored at 60°C and 90% RH for 3 hours. Thereafter, each cured film surface was intensely rubbed 10 cycles with a finger, whether the cured film fell off from the polyethylene-laminated paper serving as the substrate was visually observed, and adhesion was evaluated according to the following rating.
∘: No falling off from the substrate (that is, adhesion is good), and
×: Falling off from the substrate occurred (that is, adhesion is poor).

### [Release Force]

After the release paper obtained by the above curing method was aged at 25°C for 24 hours, an acrylic pressure-sensitive adhesive tape TESA-7475 (Tesa UK Ltd.) having a width of 25 mm was attached to the cured film surface (the side transferred from the rubber roll) of this release paper, which was cut to a size of 25 mm × 23 cm. This was sandwiched between glass plates and aged at 70°C for 24 hours under a load of 20 g/cm², thereby obtaining a sample. After air-cooling for about 30 minutes, the TESA-7475 tape of the sample was peeled at an angle of 180° at 0.3 m/min using a tensile tester (DSC-500 type tester manufactured by Shimadzu Corp.), and the force required for peeling was measured.

### [Subsequent Adhesion]

The pressure-sensitive adhesive surface of the TESA-7475 tape peeled from the release layer in the measurement of release force was attached to a stainless steel plate, and pressed by rolling back and forth a roller of 2 kg. The assembly was allowed to stand for 30 minutes, an end portion of the TESA-7475 tape was detached, and the end of the tape was peeled at a peeling speed of 0.3 m/min by pulling back at an angle of 180° relative to the stainless steel plate. At that time, the force required for peeling, namely, release force A (gf/25 mm), was measured.

In addition, virgin TESA-7475 tape was attached to a stainless steel plate. Under the same conditions as described above, the force required to peel the TESA-7475 tape from the stainless steel plate, namely, release force B (gf/25 mm), was measured. 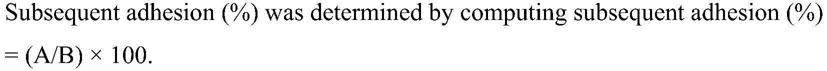 Subsequent adhesion (%) was determined by computing subsequent adhesion (%) = (A/B) × 100.

**[Table 1]**

| Formulation (parts by mass) | | Example | | | | | |
|---|---|---|---|---|---|---|---|
| | | 1 | 2 | 3 | 4 | 5 | 6 |
| Liquid composition 3-1 | (A-1-1) | 90 | 90 | 90 | 90 | 90 | 90 |
| | (A-2-1) | | | | | | |
| Liquid composition 3-2 | (A-1-2) | 7.01 | 6.88 | 6.88 | 4.70 | 4.72 | 7.33 |
| | (B-1-1) | | | | | | 0.61 |
| | (B-2-1) | 2.81 | 2.81 | 2.81 | 5.08 | 5.08 | 1.83 |
| | (B-2-2) | | | | | | |
| | (C-1-1) | 0.09 | 0.25 | 0.06 | 0.14 | 0.08 | 0.18 |
| | (C-1-2) | | | | | | |
| | (C-2-1) | 0.09 | 0.06 | 0.25 | 0.08 | 0.12 | 0.05 |
| | (C-2-2) | | | | | | |
| | (C-2-3) | | | | | | |
| Liquid composition 3-3 | | 0.50 | 0.50 | 0.50 | 0.50 | 0.50 | 0.50 |
| (D) Platinum concentration [ppm] | | 25 | 25 | 25 | 25 | 25 | 25 |
| Content of component (C) [parts by mass] * | | 0.18 | 0.31 | 0.31 | 0.22 | 0.20 | 0.23 |
| Content of component (C-1) [parts by mass]* | | 0.09 | 0.25 | 0.06 | 0.14 | 0.08 | 0.18 |
| Content of component (C-2) [parts by mass]* | | 0.09 | 0.06 | 0.25 | 0.08 | 0.12 | 0.05 |
| (C-2)/(C-1) | | 1.00 | 0.24 | 4.17 | 0.57 | 1.50 | 0.28 |
| H/Vi | | 1.6 | 1.6 | 1.6 | 2.9 | 2.9 | 1.6 |
| Viscosity [mPa·s] | | 340 | 330 | 330 | 330 | 330 | 340 |
| Low-temperature storability: @-3°C, 1 day | | ○ | ○ | ○ | ○ | ○ | ○ |
| Pot life: @50°C, 20 hr | | ○ | ○ | ○ | ○ | ○ | ○ |
| Thin film stability: @25°C, 100 min | | ○ | ○ | ○ | ○ | ○ | ○ |
| Curability: @110°C, 20 sec | | ○ | ○ | ○ | ○ | ○ | ○ |
| Adhesion: @60°C, 90% RH, 3 hr | | ○ | ○ | ○ | ○ | ○ | ○ |
| Release force [gf/25 mm] | | 23.5 | 23.2 | 23.9 | 36.5 | 37.8 | 25.0 |
| Subsequent adhesion [%] | | 95 | 95 | 96 | 97 | 96 | 99 |

| | | | | | | | |
|---|---|---|---|---|---|---|---|
| * Content based on the total of 100 parts by mass of component (A) and component (B) | | | | | | | |

**[Table 2]**

| Formulation (parts by mass) | | Example | | | | | |
|---|---|---|---|---|---|---|---|
| | | 7 | 8 | 9 | 10 | 11 | 12 |
| Liquid composition 3-1 | (A-1-1) | 90 | 90 | 90 | 90 | 90 | 90 |
| | (A-2-1) | | | | | | |
| Liquid composition 3-2 | (A-1-2) | 7.58 | 6.93 | 6.69 | 6.69 | 6.69 | 7.02 |
| | (B-1-1) | 0.93 | | | | | |
| | (B-2-1) | 1.34 | 2.81 | 2.81 | 2.81 | 2.81 | 2.81 |
| | (B-2-2) | | | | | | |
| | (C-1-1) | 0.05 | | | 0.25 | 0.14 | 0.14 |
| | (C-1-2) | | 0.14 | 0.38 | | | |
| | (C-2-1) | 0.10 | 0.12 | 0.12 | | | |
| | (C-2-2) | | | | 0.25 | 0.36 | |
| | (C-2-3) | | | | | | 0.03 |
| Liquid composition 3-3 | | 0.50 | 0.50 | 0.50 | 0.50 | 0.50 | 0.50 |
| (D) Platinum concentration [ppm]* | | 25 | 25 | 25 | 25 | 25 | 25 |
| Content of component (C) [parts by mass] | | 0.15 | 0.26 | 0.50 | 0.50 | 0.50 | 0.17 |
| Content of component (C-1) [parts by mass]* | | 0.05 | 0.14 | 0.38 | 0.25 | 0.14 | 0.14 |
| Content of component (C-2) [parts by mass]* | | 0.10 | 0.12 | 0.12 | 0.25 | 0.36 | 0.03 |
| (C-2)/(C-1) | | 2.00 | 0.86 | 0.32 | 1.00 | 2.57 | 0.21 |
| H/Vi | | 1.6 | 1.6 | 1.6 | 1.6 | 1.6 | 1.6 |
| Viscosity [mPa·s] | | 340 | 340 | 330 | 320 | 320 | 340 |
| Low-temperature storability: @-3°C, 1 day | | ○ | ○ | ○ | ○ | ○ | ○ |
| Pot life: @50°C, 20 hr | | ○ | ○ | ○ | ○ | ○ | ○ |
| Thin film stability: @25°C, 100 min | | ○ | ○ | ○ | ○ | ○ | ○ |
| Curability: @110°C, 20 sec | | ○ | ○ | ○ | ○ | ○ | ○ |
| Adhesion: @60°C, 90% RH, 3 hr | | ○ | ○ | ○ | ○ | ○ | ○ |
| Release force [gf/25 mm] | | 23.8 | 23.6 | 24.0 | 24.5 | 24.0 | 23.8 |
| Subsequent adhesion [%] | | 98 | 97 | 98 | 95 | 100 | 96 |

| | | | | | | | |
|---|---|---|---|---|---|---|---|
| * Content based on the total of 100 parts by mass of component (A) and component (B) | | | | | | | |

**[Table 3]**

| Formulation (parts by mass) | | Comparative Example | | | | |
|---|---|---|---|---|---|---|
| | | 1 | 2 | 3 | 4 | 5 |
| Liquid composition 3-1 | (A-1-1) | 90 | 90 | 90 | 90 | 90 |
| | (A-2-1) | | | | | |
| Liquid composition 3-2 | (A-1-2) | 7.09 | 6.94 | 6.78 | 7.09 | 6.78 |
| | (B-2-1) | 2.81 | 2.81 | 2.81 | 2.81 | 2.81 |
| | (C-1-1) | 0.10 | 0.25 | 0.41 | | |
| | (C-2-1) | | | | 0.10 | 0.41 |
| | (c-1) | | | | | |
| | (c-2) | | | | | |
| | (c-3) | | | | | |
| Liquid composition 3-3 | | 0.50 | 0.50 | 0.50 | 0.50 | 0.50 |
| (D) Platinum concentration [ppm] | | 25 | 25 | 25 | 25 | 25 |
| Content of component (C) [parts by mass] * | | 0.10 | 0.25 | 0.41 | 0.10 | 0.41 |
| Content of component (C-1) [parts by mass]* | | 0.10 | 0.25 | 0.41 | | |
| Content of component (C-2) [parts by mass]* | | | | | 0.10 | 0.41 |
| (C-2)/(C-1) | | | | | | |
| H/Vi | | 1.6 | 1.6 | 1.6 | 1.6 | 1.6 |
| Viscosity [mPa·s] | | 340 | 340 | 330 | 340 | 330 |
| Low-temperature storability: @-3°C, 1 day | | ○ | × | × | ○ | ○ |
| Pot life: @50°C, 20 hr | | × | ○ | ○ | × | ○ |
| Thin film stability: @25°C, 100 min | | × | × | × | ○ | ○ |
| Curability: @110°C, 20 sec | | ○ | ○ | △ | ○ | × |
| Adhesion: @60°C, 90% RH, 3 hr | | × | ○ | ○ | × | Not cured |
| Release force [gf/25 mm] | | 23.3 | 21.8 | 21.6 | 23.2 | |
| Subsequent adhesion [%] | | 94 | 89 | 88 | 96 | |

| | | | | | | |
|---|---|---|---|---|---|---|
| * Content based on the total of 100 parts by mass of component (A) and component (B) | | | | | | |

**[Table 4]**

| Formulation (parts by mass) | | Comparative Example | | | | |
|---|---|---|---|---|---|---|
| | | 6 | 7 | 8 | 9 | 10 |
| Liquid composition 3-1 | (A-1-1) | 90 | 90 | 90 | 90 | 90 |
| | (A-2-1) | | | | | |
| Liquid composition 3-2 | (A-1-2) | 7.06 | 7.04 | 6.93 | 6.93 | 6.69 |
| | (B-2-1) | 2.81 | 2.81 | 2.81 | 2.81 | 2.81 |
| | (C-1-1) | 0.01 | 0.14 | 0.14 | | 0.14 |
| | (C-2-1) | 0.12 | 0.01 | | 0.12 | |
| | (c-1) | | | | 0.14 | |
| | (c-2) | | | 0.12 | | |
| | (c-3) | | | | | 0.36 |
| Liquid composition 3-3 | | 0.50 | 0.50 | 0.50 | 0.50 | 0.50 |
| (D) Platinum concentration [ppm] | | 25 | 25 | 25 | 25 | 25 |
| Content of component (C) [parts by mass] * | | 0.13 | 0.15 | 0.14 | 0.12 | 0.14 |
| Content of component (C-1) [parts by mass]* | | 0.01 | 0.14 | 0.14 | | 0.14 |
| Content of component (C-2) [parts by mass]* | | 0.12 | 0.01 | | 0.12 | |
| (C-2)/(C-1) | | 12.0 | 0.07 | | | |
| H/Vi | | 1.6 | 1.6 | 1.6 | 1.6 | 1.6 |
| Viscosity [mPa·s] | | 340 | 340 | 340 | 340 | 340 |
| Low-temperature storability: @-3°C, 1 day | | ○ | ○ | ○ | ○ | × |
| Pot life: @50°C, 20 hr | | × | × | × | ○ | ○ |
| Thin film stability: @25°C, 100 min | | ○ | × | × | ○ | ○ |
| Curability: @110°C, 20 sec | | ○ | ○ | ○ | ○ | × |
| Adhesion: @60°C, 90% RH, 3 hr | | × | × | × | × | Not cured |
| Release force [gf/25 mm] | | 23.7 | 23.2 | 24.5 | 22.4 | |
| Subsequent adhesion [%] | | 93 | 95 | 94 | 93 | |

| | | | | | | |
|---|---|---|---|---|---|---|
| * Content based on the total of 100 parts by mass of component (A) and component (B) | | | | | | |

**[Table 5]**

| Formulation (parts by mass) | | Example | | | | | |
|---|---|---|---|---|---|---|---|
| | | 13 | 14 | 15 | 16 | 17 | 18 |
| Liquid composition 3-1 | (A-1-1) | 98.82 | 98.74 | 98.85 | 98.74 | 98.69 | 98.69 |
| | (A-2-1) | 1 | 1 | 1 | 1 | 1 | 1 |
| | (C-1-1) | 0.09 | 0.14 | 0.05 | 0.14 | 0.25 | 0.06 |
| | (C-1-2) | | | | | | |
| | (C-2-1) | 0.09 | 0.12 | 0.10 | 0.12 | 0.06 | 0.25 |
| | (C-2-2) | | | | | | |
| | (C-2-3) | | | | | | |
| Liquid composition 3-2 | (B-1-1) | | 0.50 | 1.00 | | | |
| | (B-2-1) | 2.81 | 2.00 | 1.20 | | 2.81 | 2.81 |
| | (B-2-2) | | | | 2.60 | | |
| Liquid composition 3-3 | | 0.25 | 0.25 | 0.25 | 0.25 | 0.25 | 0.25 |
| (D) Platinum concentration [ppm] | | 12 | 12 | 12 | 12 | 12 | 12 |
| Content of component (C) [parts by mass] * | | 0.18 | 0.25 | 0.15 | 0.25 | 0.30 | 0.30 |
| Content of component (C-1) [parts by mass]* | | 0.09 | 0.14 | 0.05 | 0.14 | 0.24 | 0.06 |
| Content of component (C-2) [parts by mass]* | | 0.09 | 0.12 | 0.10 | 0.12 | 0.06 | 0.24 |
| (C-2)/(C-1) | | 1.00 | 0.86 | 2.00 | 0.86 | 0.24 | 4.17 |
| H/Vi | | 1.6 | 1.6 | 1.6 | 1.6 | 1.6 | 1.6 |
| Viscosity [mPa·s] | | 380 | 380 | 380 | 390 | 370 | 370 |
| Low-temperature storability: @-3°C, 1 day | | ○ | ○ | ○ | ○ | ○ | ○ |
| Pot life: @50°C, 20 hr | | ○ | ○ | ○ | ○ | ○ | ○ |
| Thin film stability: @25°C, 100 min | | ○ | ○ | ○ | ○ | ○ | ○ |
| Curability: @110°C, 20 sec | | ○ | ○ | ○ | ○ | ○ | ○ |
| Adhesion: @60°C, 90% RH, 3 hr | | ○ | ○ | ○ | ○ | ○ | ○ |
| Release force [gf/25 mm] | | 23.2 | 22.9 | 22.2 | 23.0 | 22.8 | 24.0 |
| Subsequent adhesion [%] | | 96 | 97 | 98 | 97 | 98 | 96 |

| | | | | | | | |
|---|---|---|---|---|---|---|---|
| * Content based on the total of 100 parts by mass of component (A) and component (B) | | | | | | | |

**[Table 6]**

| Formulation (parts by mass) | | Example | | | | | |
|---|---|---|---|---|---|---|---|
| | | 19 | 20 | 21 | 22 | 23 | 24 |
| Liquid composition 3-1 | (A-1-1) | 98.78 | 98.80 | 98.85 | 98.50 | 98.50 | 98.92 |
| | (A-2-1) | 1 | 1 | 1 | 1 | 1 | 1 |
| | (C-1-1) | 0.14 | 0.08 | 0.03 | | 0.14 | 0.03 |
| | (C-1-2) | | | | 0.38 | | |
| | (C-2-1) | 0.08 | 0.12 | 0.12 | 0.12 | | |
| | (C-2-2) | | | | | 0.36 | |
| | (C-2-3) | | | | | | 0.05 |
| Liquid composition 3-2 | (B-1-1) | | | | | | |
| | (B-2-1) | 5.16 | 5.16 | 2.81 | 2.81 | 2.81 | 2.81 |
| | (B-2-2) | | | | | | |
| Liquid composition 3-3 | | 0.25 | 0.25 | 0.25 | 0.25 | 0.25 | 0.25 |
| (D) Platinum concentration [ppm] | | 12 | 12 | 12 | 12 | 12 | 12 |
| Content of component (C) [parts by mass] * | | 0.21 | 0.19 | 0.15 | 0.49 | 0.49 | 0.08 |
| Content of component (C-1) [parts by mass]* | | 0.13 | 0.08 | 0.03 | 0.37 | 0.14 | 0.03 |
| Content of component (C-2) [parts by mass]* | | 0.08 | 0.11 | 0.12 | 0.12 | 0.35 | 0.05 |
| (C-2)/(C-1) | | 0.57 | 1.50 | 4.00 | 0.32 | 2.57 | 1.67 |
| H/Vi | | 2.9 | 2.9 | 1.6 | 1.6 | 1.6 | 1.6 |
| Viscosity [mPa·s] | | 370 | 370 | 380 | 360 | 360 | 390 |
| Low-temperature storability: @-3°C, 1 day | | ○ | ○ | ○ | ○ | ○ | ○ |
| Pot life: @50°C, 20 hr | | ○ | ○ | ○ | ○ | ○ | ○ |
| Thin film stability: @25°C, 100 min | | ○ | ○ | ○ | ○ | ○ | ○ |
| Curability: @110°C, 20 sec | | ○ | ○ | ○ | ○ | ○ | ○ |
| Adhesion: @60°C, 90% RH, 3 hr | | ○ | ○ | ○ | ○ | ○ | ○ |
| Release force [gf/25 mm] | | 38.3 | 37.6 | 23.8 | 24.0 | 24.0 | 23.5 |
| Subsequent adhesion [%] | | 97 | 99 | 95 | 98 | 100 | 98 |

| | | | | | | | |
|---|---|---|---|---|---|---|---|
| * Content based on the total of 100 parts by mass of component (A) and component (B) | | | | | | | |

**[Table 7]**

| Formulation (parts by mass) | | Comparative Example | | | | | |
|---|---|---|---|---|---|---|---|
| | | 11 | 12 | 13 | 14 | 15 | 16 |
| Liquid composition 3-1 | (A-1-1) | 97.90 | 97.58 | 97.90 | 97.58 | 97.87 | 97.85 |
| | (A-2-1) | 1 | 1 | 1 | 1 | 1 | 1 |
| | (C-1-1) | 0.10 | 0.42 | | | 0.01 | 0.14 |
| | (C-2-1) | | | 0.10 | 0.42 | 0.12 | 0.01 |
| | (c-1) | | | | | | |
| | (c-2) | | | | | | |
| | (c-3) | | | | | | |
| Liquid composition 3-2 | (A-1-2) | | | | | | |
| | (B-2-1) | 2.81 | 2.81 | 2.81 | 2.81 | 2.81 | 2.81 |
| Liquid composition 3-3 | | 0.25 | 0.25 | 0.25 | 0.25 | 0.25 | 0.25 |
| (D) Platinum concentration [ppm] | | 12 | 12 | 12 | 12 | 12 | 12 |
| Content of component (C) [parts by mass] * | | 0.10 | 0.41 | 0.10 | 0.41 | 0.13 | 0.15 |
| Content of component (C-1) [parts by mass]* | | 0.10 | 0.41 | | | 0.01 | 0.14 |
| Content of component (C-2) [parts by mass]* | | | | 0.10 | 0.41 | 0.12 | 0.01 |
| (C-2)/(C-1) | | | | | | 12.0 | 0.07 |
| H/Vi | | 1.6 | 1.6 | 1.6 | 1.6 | 1.6 | 1.6 |
| Viscosity [mPa·s] | | 380 | 370 | 380 | 370 | 380 | 380 |
| Low-temperature storability: @-3°C, 1 day | | ○ | ○ | ○ | ○ | ○ | ○ |
| Pot life: @50°C, 20 hr | | × | ○ | × | ○ | × | × |
| Thin film stability: @25°C, 100 min | | × | × | ○ | ○ | ○ | × |
| Curability: @110°C, 20 sec | | ○ | △ | ○ | × | ○ | ○ |
| Adhesion: @60°C, 90% RH, 3 hr | | × | ○ | × | Not cured | × | × |
| Release force [gf/25 mm] | | 23.5 | 21.3 | 23.6 | | 24.0 | 23.5 |
| Subsequent adhesion [%] | | 94 | 89 | 95 | | 93 | 95 |

| | | | | | | | |
|---|---|---|---|---|---|---|---|
| * Content based on the total of 100 parts by mass of component (A) and component (B) | | | | | | | |

**[Table 8]**

| Formulation (parts by mass) | | Comparative Example | | | | |
|---|---|---|---|---|---|---|
| | | 17 | 18 | 19 | 20 | 21 |
| Liquid composition 3-1 | (A-1-1) | 97.74 | 97.74 | 97.38 | 97.38 | 97.95 |
| | (A-2-1) | 1 | 1 | 1 | 1 | 1 |
| | (C-1-1) | 0.14 | | 0.31 | 0.31 | 0.02 |
| | (C-2-1) | | 0.12 | 0.31 | 0.31 | 0.03 |
| | (c-1) | | 0.14 | | | |
| | (c-2) | 0.12 | | | | |
| | (c-3) | | | | | |
| Liquid composition 3-2 | (A-1-2) | | | | | |
| | (B-2-1) | 2.81 | 2.81 | 2.81 | 2.81 | 2.81 |
| Liquid composition 3-3 | | 0.25 | 0.25 | 0.25 | 2.00 | 0.25 |
| (D) Platinum concentration [ppm] | | 12 | 12 | 12 | 96 | 12 |
| Content of component (C) [parts by mass] * | | 0.14 | 0.12 | 0.61 | 0.61 | 0.05 |
| Content of component (C-1) [parts by mass]* | | 0.14 | | 0.31 | 0.31 | 0.02 |
| Content of component (C-2) [parts by mass]* | | | 0.12 | 0.31 | 0.31 | 0.03 |
| (C-2)/(C-1) | | | | 1.00 | 1.00 | 1.50 |
| H/Vi | | 1.6 | 1.6 | 1.6 | 1.6 | 1.6 |
| Viscosity [mPa·s] | | 380 | 380 | 360 | 360 | 390 |
| Low-temperature storability: @-3°C, 1 day | | ○ | ○ | ○ | ○ | ○ |
| Pot life: @50°C, 20 hr | | × | ○ | ○ | × | × |
| Thin film stability: @25°C, 100 min | | × | ○ | ○ | ○ | × |
| Curability: @110°C, 20 sec | | ○ | ○ | × | ○ | ○ |
| Adhesion: @60°C, 90% RH, 3 hr | | × | × | Not cured | ○ | × |
| Release force [gf/25 mm] | | 24.8 | 22.1 | | 21.8 | 23.4 |
| Subsequent adhesion [%] | | 94 | 93 | | 94 | 97 |

| | | | | | | |
|---|---|---|---|---|---|---|
| * Content based on the total of 100 parts by mass of component (A) and component (B) | | | | | | |

**[Table 9]**

| Formulation (parts by mass) | | Example | Example | Comp. Example | Comp. Example | Comp. Example | Comp. Example |
|---|---|---|---|---|---|---|---|
| | | 25 | 26 | 22 | 23 | 24 | 25 |
| Liquid composition 1 | (A-1-1) | 89.50 | 89.50 | 89.50 | 89.50 | 89.50 | 89.50 |
| | Platinum catalyst D | 0.50 | 0.50 | 0.50 | 0.50 | 0.50 | 0.50 |
| Liquid composition 2 | (A-1-2) | 6.88 | 6.88 | 7.06 | 7.04 | 6.93 | 6.93 |
| | (B-2-1) | 2.81 | 2.81 | 2.81 | 2.81 | 2.81 | 2.81 |
| | (C-1-1) | 0.25 | 0.06 | 0.01 | 0.14 | 0.14 | |
| | (C-2-1) | 0.06 | 0.25 | 0.12 | 0.01 | | 0.12 |
| | (c-1) | | | | | | 0.14 |
| | (c-2) | | | | | 0.12 | |
| (D) Platinum concentration [ppm] | | 25 | 25 | 25 | 25 | 25 | 25 |
| Content of component (C) [parts by mass]* | | 0.31 | 0.31 | 0.13 | 0.15 | 0.14 | 0.12 |
| Content of component (C-1) [parts by mass]* | | 0.25 | 0.06 | 0.01 | 0.14 | 0.14 | |
| Content of component (C-2) [parts by mass] * | | 0.06 | 0.25 | 0.12 | 0.01 | | 0.12 |
| (C-2)/(C-1) | | 0.24 | 4.17 | 12.0 | 0.07 | | |
| H/Vi | | 1.6 | 1.6 | 1.6 | 1.6 | 1.6 | 1.6 |
| Viscosity [mPa·s] | | 330 | 330 | 340 | 340 | 340 | 340 |
| Low-temperature storability: @-3°C, 1 day | | ○ | ○ | ○ | ○ | ○ | ○ |
| Pot life: @50°C, 20 hr | | ○ | ○ | × | × | × | ○ |
| Thin film stability: @25°C, 100 min | | ○ | ○ | ○ | × | × | ○ |
| Curability: @110°C, 20 sec | | ○ | ○ | ○ | ○ | ○ | ○ |
| Adhesion: @60°C, 90% RH, 3 hr | | ○ | ○ | × | × | × | × |
| Release force [gf/25 mm] | | 23.2 | 24.0 | 24.5 | 23.6 | 25.1 | 22.6 |
| Subsequent adhesion [%] | | 97 | 98 | 94 | 95 | 95 | 93 |

| | | | | | | | |
|---|---|---|---|---|---|---|---|
| * Content based on the total of 100 parts by mass of component (A) and component (B) | | | | | | | |

As indicated in Comparative Examples 1 to 25 of Tables 3, 4, 7, 8, and 9, in cases in which the addition reaction control agent (C-1-1) or (C-2-1) alone was used (Comparative Examples 1 to 5 and 11 to 14), cases in which (C-1-1) and (C-2-1) were used in combination but the blending amounts were small or large (Comparative Examples 6, 7, 15, 16, and 19 to 23), and cases in which the blending amounts were appropriate in the combined-use system but (c-1) to (c-2) for Comparative Examples were used (Comparative Examples 8 to 10, 17, 18, 24, and 25), problems were observed in at least one of properties among low-temperature storability, pot life, thin film stability, curability, and adhesion, and Comparative Examples did not satisfy all the properties.

In contrast, as indicated in Examples 1 to 26 of Tables 1, 2, 5, 6, and 9, the organopolysiloxane compositions of the invention exhibited favorable results in all of low-temperature storability, pot life, thin film stability, and curability. In addition, for the obtained release sheets, the pressure-sensitive adhesive tapes were peeled at low release force, and the pressure-sensitive adhesive tapes after peeling maintained high subsequent adhesion. Further, adhesion to polyethylene-laminated paper was also favorable. Notably, as indicated in Examples 13 to 24 of Tables 5 and 6, combined use of methylvinylpolysiloxane and acryloyl group-containing methylvinylpolysiloxane as component (A) was demonstrated to provide favorable results with a smaller amount of platinum.

### INDUSTRIAL APPLICABILITY

The curable organopolysiloxane composition of the invention exhibits excellent performance in all of curability, pot life, low-temperature storability, thin film stability, and adhesion, and can form a cured film having favorable release force and subsequent adhesion. Therefore, the curable organopolysiloxane composition of the invention can be suitably used, particularly as a solventless organopolysiloxane composition for release sheets.

## Claims

1. A curable organopolysiloxane composition for release sheets, comprising the following components (A), (B), (C), and (D):
(A) an organopolysiloxane having at least two silicon-bonded alkenyl groups per molecule, having a content of silicon-bonded alkenyl groups of 0.001 to 0.3 mol/100 g, and having a viscosity at 25°C of 1 to 10,000 mPa·s, in an amount of 90 to less than 100 parts by mass;
(B) an organohydrogenpolysiloxane having at least three silicon-bonded hydrogen atoms per molecule, having a content of silicon-bonded hydrogen atoms of 0.5 to 2.0 mol/100 g, and having a viscosity at 25°C of 2 to 200 mPa·s, in an amount such that a number ratio of the silicon-bonded hydrogen atoms in component (B) to alkenyl groups in component (A) is 0.5 to 5.0;
(C) an addition reaction control agent including the following (C-1) and (C-2), in an amount of 0.06 to 0.60 parts by mass based on a total of 100 parts by mass of components (A) and (B), with a mass ratio of (C-2) to (C-1), (C-2)/(C-1), of 0.10 to 5.00,
(C-1) an acetylenic alcohol having a boiling point of 150 to 189°C and represented by the following formula (1): 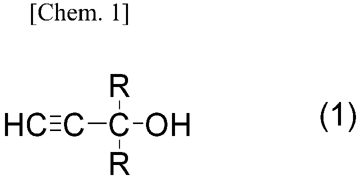 wherein R is each independently a hydrogen atom or an unsubstituted or substituted monovalent hydrocarbon group free of aliphatic unsaturation, and two R may be bonded to each other to form a ring, in an amount of 0.02 to 0.40 parts by mass based on the total of 100 parts by mass of components (A) and (B);
(C-2) a compound having a refractive index at 25°C of 1.420 to 1.450 and a boiling point of 190°C or higher, in an amount of 0.02 to 0.40 parts by mass based on the total of 100 parts by mass of components (A) and (B); and
(D) a platinum group metal-based catalyst in an amount to give 0.1 to 200 ppm of platinum group metal based on a total mass of components (A) to (C).

2. The curable organopolysiloxane composition for release sheets according to claim 1, which is a two-part curable organopolysiloxane composition for release sheets, comprising a liquid composition 2-1 and a liquid composition 2-2,
wherein the liquid composition 2-1 contains component (A) and component (D), and
the liquid composition 2-2 contains component (B) and component (C), and optionally contains component (A).

3. The curable organopolysiloxane composition for release sheets according to claim 1, which is a three-part curable organopolysiloxane composition for release sheets, comprising a liquid composition 3-1, a liquid composition 3-2, and a liquid composition 3-3, wherein (I) the liquid composition 3-1 consists of component (A) alone,
the liquid composition 3-2 contains component (B), component (C), and optionally component (A), and
the liquid composition 3-3 contains component (D) and optionally component (A), or (II) the liquid composition 3-1 contains component (A) and component (C),
the liquid composition 3-2 contains component (B) and optionally component (A), and
the liquid composition 3-3 contains component (D) and optionally component (A).

4. The curable organopolysiloxane composition for release sheets according to claim 1, wherein component (C-1) is selected from 1-ethynyl-1-cyclohexanol and 3,5-dimethyl-1-hexyn-3-ol.

5. The curable organopolysiloxane composition for release sheets according to claim 1, wherein component (C-2) is one or more compounds selected from bis(1,1-dimethyl-2-propynyloxy)dimethylsilane, 1,3,5,7-tetramethyl-1,3,5,7-tetravinylsiloxane, and 3-methyl-1-dodecyn-3-ol.

6. The curable organopolysiloxane composition for release sheets according to claim 1, wherein component (A) is an organopolysiloxane having at least two silicon-bonded alkenyl groups per molecule, having a content of silicon-bonded alkenyl groups of 0.01 to 0.08 mol/100 g, and having a viscosity at 25°C of 60 to 1,000 mPa·s.

7. The curable organopolysiloxane composition for release sheets according to claim 1, wherein component (A) is a mixture containing the following components (A-1) and (A-2), and component (A) as a whole has a content of silicon-bonded alkenyl groups of 0.001 to 0.3 mol/100 g:
(A-1) an organopolysiloxane having two or more silicon-bonded alkenyl groups per molecule and having a content of silicon-bonded alkenyl groups of 0.001 mol/100 g or more and less than 0.3 mol/100 g, in an amount of 50 to 99.9 parts by mass; and
(A-2) an organopolysiloxane having 0.1 to 20 silicon-bonded (meth)acryloyl group-containing groups per molecule and having 0.1 or more silicon-bonded alkenyl groups per molecule, in an amount of 0.1 to 50 parts by mass.

8. The curable organopolysiloxane composition for release sheets according to claim 7, wherein component (A-1) is an organopolysiloxane represented by the following formula (2):
(R¹₃SiO_{1/2})ₐ(R¹₂SiO)_{b}(R¹SiO_{3/2})_{c}(SiO_{4/2})_{d} (2)
wherein R¹ is each independently a hydroxyl group, an alkenyl group of 2 to 12 carbon atoms, or an unsubstituted or substituted monovalent hydrocarbon group free of aliphatic unsaturation, at least two of R¹ are alkenyl groups, and a to d are each 0 or a positive number satisfying 2 ≤ a ≤ 202, 5 ≤ b ≤ 1,000, 0 ≤ c ≤ 100, and 0 ≤ d ≤ 100, provided that 0 ≤ c + d ≤ 100.

9. The curable organopolysiloxane composition for release sheets according to claim 7, wherein component (A-2) is an organopolysiloxane represented by the following formula (3):
(R²₃SiO_{1/2})ₑ(R²₂SiO)_{f}(R²SiO_{3/2})_{g}(SiO_{4/2})ₕ (3)
wherein R² is each independently a hydroxyl group, an alkenyl group of 2 to 12 carbon atoms, a (meth)acryloyl group-containing group, or an unsubstituted or substituted monovalent hydrocarbon group free of aliphatic unsaturation, at least 0.1 of R² are alkenyl groups, 0.1 to 20 of R² are (meth)acryloyl group-containing groups, and e to h are each 0 or a positive number satisfying 2 ≤ e ≤ 202, 5 ≤ f ≤ 1,000, 0 ≤ g ≤ 100, and 0 ≤ h ≤ 100, provided that 0 ≤ g + h ≤ 100.

10. The curable organopolysiloxane composition for release sheets according to claim 1, wherein component (B) is one or more organohydrogenpolysiloxanes represented by the following formula (4):
R³ᵢHⱼSiO_{(4-i-j)/2} (4)
wherein R³ is each independently an unsubstituted or substituted monovalent hydrocarbon group of 1 to 12 carbon atoms and free of aliphatic unsaturation, and i and j are positive numbers satisfying 0.7 ≤ i ≤ 2.1, 0.001 ≤ j ≤ 1.0, and 0.8 ≤ i + j ≤ 3.0.

11. The curable organopolysiloxane composition for release sheets according to claim 1, wherein component (B) is a linear organohydrogenpolysiloxane represented by the following formula (5):
(R³₃SiO_{1/2})₂(R³HSiO)ₚ(R³₂SiO)_{q} (5)
wherein R³ is as defined above, and p and q are integers satisfying 3 ≤ p ≤ 199 and 1 ≤ q ≤ 197, provided that 4 ≤ p + q ≤ 200.

12. The curable organopolysiloxane composition for release sheets according to claim 11, wherein component (B) is a combination of (B-1) the linear organohydrogenpolysiloxane represented by formula (5) and (B-2) a linear organohydrogenpolysiloxane represented by the following formula (6), and a mass ratio of component (B-2) to (B-1), (B-2)/(B-1), is 1 to 10:
(R³₃SiO_{1/2})₂(R³HSiO)ₖ (6)
wherein R³ is as defined above, and k is an integer satisfying 1 ≤ k ≤ 200.

13. The curable organopolysiloxane composition for release sheets according to claim 1, which is free of a solvent.

14. A release sheet comprising a sheet-like substrate and a cured film formed by curing the curable organopolysiloxane composition for release sheets according to any one of claims 1 to 13 on one surface or both surfaces of the substrate.
